# EUROPÄISCHE PATENTSCHRIFT

(11) **EP 1 290 383 B1**
(45) Veröffentlichungstag und Bekanntmachung des Hinweises auf die Patenterteilung: **16.01.2008**
(21) Anmeldenummer: 01960228.3
(22) Anmeldetag: 18.05.2001
(51) Int. Cl.: F24J 2/12, F24J 2/54

(54) **KONZENTRIERENDES SOLARENERGIESYSTEM**
CONCENTRATING SOLAR ENERGY SYSTEM
SYSTEME D'ENERGIE SOLAIRE CONCENTRATEUR

(30) Priorität: 22.05.2000 DE 10025212
(43) Veröffentlichungstag der Anmeldung: 12.03.2003
(73) Patentinhaber: Nöhrig, Andreas, 97299 Zell am Main (DE)
(72) Erfinder: Nöhrig, Andreas, 97299 Zell am Main (DE)
(74) Vertreter: Manitz, Finsterwald & Partner GbR
(86) Internationale Anmeldenummer: PCT/EP2001/005743
(87) Internationale Veröffentlichungsnummer: WO 2001/090662

(56) Entgegenhaltungen:
- WO-A-82/00719
- WO-A-97/49956
- FR-A- 2 512 181
- US-A- 4 602 613
- PATENT ABSTRACTS OF JAPAN vol. 007, no. 095 (M-209), 21. April 1983 (1983-04-21) -& JP 58 019655 A (SUMITOMO DENKI KOGYO KK), 4. Februar 1983 (1983-02-04)

## Beschreibung

Die vorliegende Erfindung betrifft ein konzentrierendes Solarenergiesystem mit einem als zweiachsig nachgeführten Parabolspiegel realisierten Reflektor mit einer spiegelnden Innenseite, der von einem in einer Tragebene angeordneten Grundrahmen getragen ist und mit einem im Betrieb in, vor oder nach dem Brennpunkt des Parabolspiegels angeordneten Receiver, wobei der Parabolspiegel außerdem um eine zumindest im wesentlichen senkrecht zur Tragebene angeordnete Achse drehbar ist.

Die bisher realisierten Solarenergieanlagen lassen sich grob in drei Gruppen aufteilen: photovoltaische Anlagen, die aus dem Sonnenlicht direkt elektrischen Strom erzeugen, Solarkollektoren, die flächig dem Sonnenlicht Wärme entnehmen und konzentrierende Solarenergiesysteme, die das Sonnenlicht stark bündeln und in einem Receiver Hochtemperaturenergie gewinnen können.

Die konzentrierenden Solarenergiesysteme zeichnen sich physikalisch dadurch aus, daß sich die Energie auf mehreren Niveaus nutzen läßt. Dadurch können Wirkungsgrade von über 70% erreicht werden. Wird zum Beispiel Wärme von 600°C erzeugt, so kann diese im Bereich von 600°C-100°C zum Erzeugen von elektrischem Strom genutzt werden. Die dabei entstehende Abfallwärme kann danach noch in Form von ca. 90°C heißem Wasser genutzt werden.

Diese konzentrierenden Systeme haben den Nachteil, daß sie der Sonne nachgeführt werden müssen, was bei großen Flächen sehr aufwendig sein kann. Es können drei verschiedene Arten von konzentrierenden Solarenergieanlagen unterschieden werden: Solartunnkraftwerke, bei denen die Sonnennachführung mit Hilfe von Heliostaten erfolgt, Parabolrinnenanlagen, die der Sonne nur vertikal nachgeführt werden müssen und zweiachsig nachgeführte Parabolreflektoren.

Ansätze für die Realisierung von Solarenergieanlagen sowie zur Möglichkeit der Verwendung von Stirlingmotoren, die unter anderem als Antrieb für Stromerzeuger verwendet werden können und Möglichkeiten der Energiespeicherung sind in dem Buch "Stirlingmaschinen - Grundlagen. Technik. Anwendung von Martin Werdich ISBN 3 - 922964.35-4 beschrieben. Das Buch zeigt in der Abbildung 53 einen zweiachsig nachgeführten Parabolreflektor, der in Draufsicht kreisrund ist und von einem aufwendigen Grundrahmen und darauf montierten Gestell getragen ist. Der Parabolspiegel ist im Raum der Sonne zugewandt abgestützt und um eine waagerechte Achse schwenkbar, die sich parallel zu einem Durchmesser des in Draufsicht kreisrunden Parabolspiegels vor dessen spiegelnder Oberfläche befindet, um eine vertikale Nachführung entsprechend der Höhenposition der Sonne zu ermöglichen. Diese vertikale Nachführung ist in der Fachsprache als Nachführung der Elevation bzw. der Höhe bezeichnet. Darüber hinaus ist eine Drehung des Parabolspiegels um eine Achse senkrecht zum Grundrahmen möglich. Diese Drehung bewirkt die horizontale Sonnennachführung.

Eine ähnliche Konstruktion ist aus der deutschen Gebrauchsmusterschrift G 8427130.2 bekannt. Dort kommt als Reflektor anstelle eines Vollparaboloids ein Teilparaboloid zur Anwendung, der sich etwa über 240° um die Symmetrieachse des Paraboloids erstreckt. Auch hier erfolgt die vertikale Nachführung um eine Schwenkachse, die fest am Grundrahmen angeordnet ist und zwar in einer deutlichen Höhe oberhalb des Grundrahmens.

Problematisch bei dieser bekannten Konstruktion ist vor allem die Anordnung der waagerechten Achse, die der vertikalen Sonnennachführung dient.

Probleme entstehen bei dieser Anordnung dadurch, daß der Parabolreflektor so hoch über dem Grund angebracht werden muß, daß für die vertikale Nachführung genügend Bodenfreiheit besteht. Der Schwerpunkt des Systems liegt also sehr hoch.

Dies führt bei großen Systemen, bei denen der Durchmesser des Parabolreflektors 10 m - 20 m beträgt, zu sehr massiven, tonnenschweren Ausführungen, da die Konstruktion auch sturmfest sein muß.

Bei dieser Konstruktion kann auch die empfindliche Reflektoroberfläche nicht auf einfache Art vor Umwelteinflüssen wie Niederschlag geschützt werden. Hierdurch entsteht ein erheblicher Reinigungsaufwand, der auch zu erhöhtem Verschleiß der Reflektoroberfläche führt. Weiche, kostengünstige Materialien, wie verspiegelte Kunststofffolien, können für die Reflektorschicht nicht benutzt werden. Der Spiegel würde frühzeitig blind.

Weiter ist es völlig undenkbar, ein System dieser Art auf das Flachdach eines normalen Gebäudes zu stellen, da es zu schwer ist und zu hoch über das Haus hinausragt. Das Dach eines Hauses ist aber gerade der günstigste Ort zur Installation von Solarenergieanlagen, da hier wenig Schatten ist und die sonst ungenützte Fläche genutzt werden kann. Weiterhin ist der Energietransportweg sehr kurz, d.h. das System ist für die dezentrale Energieversorgung geeignet.

Den nächstkommenden Stand der Technik gibt insbesondere auch die Schrift WO 82/00719 wieder.

Ausgehend von diesem Stand der Technik liegt der vorliegenden Erfindung die Aufgabe zugrunde, ein zweiachsig nachgeführtes, konzentrierendes Solarenergiesystem so zu konstruieren, daß mit weitaus geringerem Aufwand als bisher eine höhere Stabilität der Anordnung erreicht wird, daß der Parabolspiegel bei fehlender Sonnenstrahlung in eine Ruhestellung gebracht werden kann, in der die Anlage nur geringe Angriffsflächen für Wind bietet, absolut sturmfest ist und die Reflexionsschicht vor Niederschlag geschützt ist. Weiterhin soll das System auf dem Flachdach eines Gebäudes installiert werden können und das Dach sogar ersetzen können, d.h. die Funktion des Daches übernehmen können.

Zur Lösung dieser Aufgabe wird nach einem ersten Lösungsansatz erfindungsgemäß vorgesehen, daß die Schwenkachse des Parabolspiegels in einer zur Tragebene parallelen Ebene oder in der Tragebene verschiebbar angeordnet ist und die Verschiebung der Schwenkachse zu der entsprechenden Schwenkbewegung des Parabolspiegels führt bzw. beiträgt. Vorzugsweise wird der Parabolspiegel so gestaltet, dass er eine im Betrieb untere Kante aufweist, die zumindest im wesentlichen benachbart zur Tragebene angeordnet ist und in Draufsicht entweder gerade verläuft oder leicht gekrümmt ist, wobei der Parabolspiegel um eine im Bereich seiner unteren Kante und zumindest im wesentlichen parallel zur Tragebene angeordnete und über den Grundrahmen linear verfahrbare Schwenkachse hinauf und herunter schwenkbar ist.

Dadurch, daß der Parabolspiegel mit einer im Betrieb unteren Kante vorgesehen ist, die in Draufsicht entweder gerade verläuft oder leicht gekrümmt ist, gelingt es, die Schwenkachse des Parabolspiegels im Bereich dieser unteren Kante und daher in unmittelbarer Nähe der Tragebene bzw. des Grundrahmens anzuordnen, so daß die Schwenkachse beispielsweise nur wenig oberhalb des Bodens angeordnet sein muß und der Schwerpunkt des Parabolspiegels immer nur gerade so hoch wie gerade nötig über dem Boden angeordnet ist. Hierdurch sind die mechanischen Anforderungen für die Abstützung des Parabolspiegels wesentlich geringer als bei der bekannten Anordnung, wodurch die gesamte Struktur einfacher und leichter zu realisieren ist. Der Grundrahmen kann sozusagen zur direkten Abstützung der Schwenkachse herangezogen werden und es ist nicht mehr erforderlich, eine riesige Rahmenkonstruktion in drei Dimensionen herzustellen, um den zweiachsig nachgeführten Parabolspiegel zu tragen. Selbst wenn der Parabolspiegel sich jetzt quasi als halbierter Parabolspiegel darstellt, d.h. als Halbparaboloid, der sich um etwa 180° um die Symmetrieachse erstreckt, so bedeutet dies keinen Verlust an wirksamer Oberfläche des Parabolspiegels, denn die Länge der unteren Kante des Parabolspiegels und somit dessen wirksame Fläche kann ohne weiteres vergrößert werden, ohne daß die Konstruktion hierdurch wesentlich schwerer wird. Somit bietet die Erfindung bei gleicher Flächenausdehnung wie der an sich bekannte Parabolspiegel wesentliche Vorteile.

In Bezug auf die vertikale Nachführung des Parabolspiegels wird erfindungsgemäß, mit Hilfe eines Linearantriebs (Stellantriebs) die Schwenkachse des Parabolspiegels über dem Grundrahmen verfahren, um hierdurch die Heraufschwenkbewegung und Herunterschwenkbewegung des Parabolspiegels zu erzeugen.

Hierdurch werden folgende Vorteile u.a. erreicht:
- Durch die mit der linearen Verfahrbarkeit der Schwenkachse des Parabolspiegels einhergehende Schwenkbewegung des Parabolspiegels wird der Schwerpunkt des Parabolspiegels in Bezug auf den Grundrahmen stets ungefähr über der Mitte des Grundrahmens gehalten, so daß eine besondere Stabilität gegenüber angreifenden Kräften erreicht wird.
- Durch die Anordnung der unteren Kante des Parabolspiegels im wesentlichen unmittelbar benachtbart zur Tragebene in Kombination mit der Schwenkbewegung, die durch Verfahren der Schwenkachse über dem Grundrahmen unmittelbar benachbart zur Tragebene erzielt wird, wird die Stabilität der Konstruktion noch weiter erhöht.
- Zur vertikalen Sonnennachführung durch die Änderung der Lage des Parabolspiegels kombiniert mit der Schwenkbewegung wird der Parabolspiegel gegenüber dem Grundrahmen immer nur so hoch gehoben wie es zu diesem Zweck gerade notwendig ist, was wiederum die Stabilität erhöht, d.h. der Schwerpunkt bleibt stets in einer niedrigen Position.
- Durch die Verschiebbarkeit der Schwenkachse über dem Grundrahmen wird ein Zuklappen des Paraboloids ermöglicht, so daß die Spiegelfläche nach unten zeigt und somit gegen ungünstige Umwelteinwirkungen geschützt ist.

Dadurch, daß die genannte Schwenkachse in der Nähe des Grundrahmens angeordnet ist, kann der Parabolspiegel soweit heruntergeschwenkt werden, daß er als Dach verwendet wird und die spiegelnde Fläche nach unten weist und somit gegen Umwelteinflüsse, wie Niederschlag usw. geschützt ist. In diesem heruntergeschwenkten Zustand ist der Parabolspiegel und das Solarenergiesystem selbst so positioniert, daß nur geringe Angriffsflächen für Wind vorliegen und das System absolut sturmfest ist.

Hierdurch kann der Parabolspiegel gegenüber dem Grundrahmen soweit heruntergeschwenkt werden, daß er auf der tragenden Unterlage bzw. auf dem Fundament, einem Untergrund oder einer dem Umriß des Parabolspiegels angepaßten Mauer dicht oder bündig aufliegt. Der Parabolspiegel kann dann mit einfachen Mitteln an der tragenden Unterlage befestigt werden, so daß es absolut sturmfest angebracht ist.

An dieser Stelle soll kurz auf die japanische Schrift 58019655 hingewiesen werden. Diese Schrift zeigt eine Linsenmatrix, die zur Gewinnung von Sonnenergie ausgelegt ist. Die rechteckige Matrix wird um eine horizontale Schwenkachse an einem Ständer abgestützt, wobei der Schwenkwinkel der Linsenmatrix geändert werden kann durch einen Lenkarm, der an seinem einen Ende im unteren Bereich der Linsenmatrix an diesem angelenkt ist und an seinem anderen Ende an einem Schubblock angelenkt ist, der mittels einer Gewindestange in einer horizontalen Ebene fahrbar ist. Die gesamte Anordnung ist auf einem Grundrahmen montiert, der um eine senkrechte Achse drehbar ist. Auf diese Weise kann die Linsenmatrix stets so positioniert werden, dass sie auf die Sonne zuweist. Problematisch bei dieser Konstruktion ist aber, dass auch sie eine sehr schwere Ausführung in der Praxis erfordert, um die verlangte Stabilität gegen Sturmböen aufzuweisen. Eine Möglichkeit, die Linsenmatrix soweit herunterzuschwenken, dass die Linsen nach unten weisen, und dass der Schwerpunkt insgesamt tief liegt, ist bei der gewählten Konstruktion nicht gegeben und auch nicht machbar, da der Ständer, der die Schwenkachse trägt, eine solche Schwenkbewegung verhindert.

Vorzugsweise erstreckt sich bei dem erfindungsgemäßen Parabolspiegel eine längliche Tragstruktur entlang der unteren Kante des Parabolspiegels, die sowohl den Parabolspiegel versteift als auch die Schwenkachse trägt.

Auf diese Weise erfolgt eine mechanisch ausgeklügelte Anbindung der Schwenkachse an den Parabolspiegel und der Parabolspiegel selbst kann noch leichter gebaut werden, da die Tragstruktur zu dessen Versteifung beiträgt.

Zur Realisierung der Drehbewegung um die senkrechte Achse ist der Grundrahmen mittels Rollen oder Räder auf einer kreisförmigen Bahn drehbar. Dabei sind die Rollen oder Räder am Grundrahmen selbst angebracht. Diese Bahn kann am Boden bzw. auf einem Fundament oder auf Mauern ausgebildet sein. Alternativ hierzu können Rollen oder Räder an diskreten Stellen entlang der kreisförmigen Bahn angeordnet und am Boden bzw. an einem Fundament abgestützt werden. Der Grundrahmen würde in diesem Beispiel einen kreisförmigen Ring umfassen, der an den Rollen bzw. Rädern umlaufen kann. Sind die Räder oder Rollen am Grundrahmen befestigt und steht ein ebener fester Untergrund zur Verfügung, z.B. die Betondecke des obersten Stockwerks eines Hauses oder ein Flachdach, so bildet dieser Untergrund die kreisförmige Bahn. Die Räder können dann direkt auf diesem Untergrund aufsetzen. Solche Konstruktionen können preisgünstig realisiert werden und die innewohnende Festigkeit des Bodens bzw. von Fundamenten und Mauern ermöglicht eine solide Abstützung des Parabolspiegels. Es soll an dieser Stelle zum Ausdruck gebracht werden, daß, obwohl man üblicherweise den Grundrahmen bzw. die Bahn waagerecht anordnen wird, es auch ohne weiteres möglich ist, den Grundrahmen bzw. die Bahn parallel zum Boden an einem geneigten Hanggrundstück oder auf eine entsprechenden Schrägstellung realisierende Mauer abzustützen, beispielsweise für den Fall, daß im heruntergeschwenkten Zustand eine höhere Neigung des Daches aus irgendwelchem Grund erwünscht sein sollte. Bei einer solchen Schrägstellung des Grundrahmens muß man nur entsprechende Maßnahmen treffen, daß der Grundrahmen gegen Wegrutschen gesichert ist.

Besonders günstig ist es, wenn der Grundrahmen zu einer horizontalen Ebene geneigt angeordnet ist, wobei im hinaufgeschwenkten Zustand des Parabolspiegels der Grundrahmen im Bereich der Schwenkachse, d.h. vorne, höher angeordnet ist als weiter hinten, d.h. im Bereich der Schwenkachse im heruntergeschwenkten Zustand. Dies kann u.a. dadurch erreicht werden, daß die Räder, die im hinaufgeschwenkten Zutand des Parabolspiegels im Bereich der Schwenkachse, d.h. vorne am Grundrahmen angeordnet sind, einen größeren Durchmesser aufweisen als die Räder, die im heruntergeschwenkten Zustand des Parabolspiegels im Bereich der Schwenkachse, d.h. hinten am Grundrahmen angeordnet sind.

Hierdurch wird erreicht, daß bei Sonnenhochstand, insbesondere am Äquator, der Paraboloid im heraufgeschwenkten Zustand eine waagerechte oder fast waagerechte Position erreicht. Durch die Vorneigung des Grundrahmens kann das erforderliche Ausmaß der Schwenkbewegung begrenzt werden, was die Geometrie insgesamt positiv beeinflußt.

Nach einem zweiten Lösungsansatz zeichnet sich die vorliegende Erfindung dadurch aus, daß der Parabolspiegel um eine untere, im Bereich der Tragebene oder in einem Abstand oberhalb oder unterhalb dieser angeordnete Schwenkachse hinauf- und herunterschwenkbar ist, wobei die Schwenkachse in einer zur Tragebene parallelen Ebene oder in der Tragebene verschiebbar angeordnet ist und die Verschiebung der Schwenkachse zu der entsprechenden Schwenkbewegung des Parabolspiegels führt bzw. beiträgt. Mit anderen Worten ist der Parabolspiegel um eine vom Grundrahmen abgestützte Schwenkachse hinauf- und herunterschwenkbar und die Schwenkachse in einer zu der Tragebene parallelen Ebene zur Durchführung der entsprechenden Schwenkbewegung verschiebbar angeordnet.

Die Verschiebung der Schwenkachse um das Hinauf- bzw. das Herunterschwenken des Parabolspiegels zu bewirken, hat den entscheidenden Vorteil, daß der Schwerpunkt des Parabolspiegels stets oberhalb des Grundrahmens und vorzugsweise stets im Bereich der vertikalen Drehachse angeordnet werden kann, so daß eine sehr stabile Anordnung sich ergibt und die Konstruktion des Grundrahmens nicht übermäßig schwer ausgeführt werden muß, um eine sich ändernde Position des Schwerpunkts zu berücksichtigen, da der Schwerpunkt in bzw. in etwa in einer konstanten Position verbleibt.

Zur Realisierung der Schwenkbewegung des Parabolspiegels ist dieser über eine Gestängeanordnung mit dem Grundrahmen verbunden und die Schwenkachse über den Grundrahmen verfahrbar ausgelegt. Die Gestängeanordnung kann in einer ersten Variante der Erfindung aus mindestens einem Lenkarm bestehen, der an einem Ende im mittleren Bereich des Parabolspiegels auf dessen Rückseite und am anderen Ende auf einem Stützpunkt schwenkbar angelenkt ist, der vom Grundrahmen getragen und hinter dem Parabolspiegel angeordnet ist. Der Stützpunkt kann deutlich oberhalb des Grundrahmens liegen, beispielsweise in einer Höhe, welche etwas oberhalb der maximalen Bauhöhe des Parabolspiegel im heruntergeschwenkten Zustand liegt. Hierdurch kann der Lenkarm geradlinig ausgeführt werden, wodurch er kostengünstig und mit geringem Gewicht realisiert werden kann. Dies ist jedoch nicht unbedingt erforderlich und es kann durchaus auch vorteilhaft sein, den Stützpunkt tiefer oder sogar unterhalb des Grundrahmens anzuordnen wie später näher erläutert wird.

Vorzugsweise sind zwei oder mehrere Lenkarme vorgesehen, die an jeweiligen Stellen auf der Rückseite des Parabolspiegels und an jeweiligen Stützpunkte schwenkbar angelenkt sind. Die Benutzung von mindestens zwei solchen Lenkarmen führt zu einer stabilen Konstruktion, die der Neigung des Parabolspiegels zu Verformungen entgegenwirkt und somit ebenfalls zu einer leichtgewichtigen Konstruktion beiträgt.

Im Bereich des Stützpunktes jedes Lenkarms am Grundrahmen ist vorzugsweise eine Aussparung im Parabolspiegel vorgesehen, die vom Schnittpunkt der Wölbung des Parabolspiegels mit der Tragstruktur des Parabolspiegels bis zu einer gedachten Linie zwischen der Schwenkachse des Parabolspiegels und der Anlenkachse des jeweiligen Lenkarms am Parabolspiegel oder einer dazu parallelen Linie reicht. Hierdurch wird der Parabolspiegel versteift und verstärkt. Weiterhin erlaubt die Aussparung(en), den Stützpunkt von jedem Lenkarm nach unten zu verlegen, da die Aussparung den Lenkarm aufnehmen kann, wodurch es möglich wird, den Parabolspiegel soweit herauf zu schwenken, daß die Horizontalposition erreicht wird.

Es ist im übrigen vorteilhaft, wenn die im Betrieb untere Kante des Parabolspiegels im Bereich des Grundrahmens Aussparungen aufweist. Dies verhindert, daß der Parabolspiegel im aufgeschwenkten Zustand am Grundrahmen anstößt und eine größere Schwenkbewegung des Parabolspiegels zuläßt.

Anstelle den Lenkarm oder die Lenkarme an der Rückseite des Parabolspiegels zu befestigen, kann er bzw. können sie an einem Ende im mittleren Bereich des Parabolspiegels auf dessen spiegelnde Innenseite und am anderen Ende auf einem Stützpunkt schwenkbar angelenkt sein, der vom Grundrahmen getragen ist und im heruntergeschwenkten Zustand des Parabolspiegels benachbart zur von der im hochgeschwenkten Zustand oberen Kante des Parabolspiegels angenommenen Position sich befindet. Auch bei dieser Anordnung sind vorzugsweise zwei oder mehrere Lenkarme vorgesehen, die an jeweiligen Stellen auf der Innenseite des Parabolspiegels und am jeweiligen Stützpunkt am Grundrahmen schwenkbar angelenkt sind. Diese Anordnung des Lenkarms bzw. der Lenkarme auf der Innenseite des Parabolspiegels führt zu dem Vorteil, daß die gesamte Mechanik im heruntergeschwenkten Zustand unterhalb des Parabolspiegels angeordnet und somit in dieser Ruheposition geschützt ist. Eine besondere Ruheposition einzuführen ist sinnvoll, da das System nur bei schönem Wetter, also Sonnenschein, aktiv sein muß. Bei Niederschlag und Sturm scheint keine Sonne, deshalb könnte das System auch als Dach dienen, da ein festes Dach im Bezug auf die Witterung gerade nur dann gebraucht wird, wenn die Sonne nicht scheint.

Zum Verfahren der Schwenkachse am Grundrahmen ist vorzugsweise ein von einem Antriebsmotor angetriebener Stellantrieb vorgesehen. Für die Realisierung des Stellantriebs bestehen mehrere Möglichkeiten. Einerseits kann es sich bei dem Stellantrieb um eine am Grundrahmen gelagerte Gewindespindel handeln, die in einem entsprechenden Gewinde bzw. in einer entsprechenden Gewindemutter das bzw. die in einen Schubblock sich befindet, der zur die Schwenkachse tragenden Struktur gehört.

Es wird vorzugsweise ein Schubblock für jedes Schwenklager der Schwenkachse vorgesehen. Eine Gewindespindel wird somit jedem Schwenklager der Schwenkachse zugeordnet und greift im Bereich des Schubblockes des Parabolspiegels bzw. an der Tragstruktur des Parabolspiegels ein. Beim Vorsehen von mehreren Gewindespindeln müssen diese synchron angetrieben werden, was beispielsweise mittels eines beide Spindeln gleichzeitig antreibenden Kettenantriebs erfolgen kann.

Bei Verwendung von mehreren die Schwenkachse tragenden Schubblökken mit einer von der Anzahl der Schubblöcke abweichenden Anzahl von Stellantrieben können die Schubblöcke miteinander zu einem Verbund fest verbunden werden und der Stellantrieb bzw. die Stellantriebe an den Verbund so angeschlossen werden, daß die antreibenden Kräfte zumindest im wesentlichen gleichmäßig auf die Schubblöcke verteilt sind.

Alternativ zur Verwendung von Gewindespindeln kann es sich bei dem Stellantrieb um einen Kettenantrieb handeln, dessen Kette um zwei am Grundrahmen schwenkbar gelagerte Kettenräder läuft und an einer Stelle im Bereich der Schwenkachse am Parabolspiegel befestigt ist.

Es kann beispielsweise ein Kettenantrieb jedem Schwenklager der Schwenkachse zugeordnet werden und die Kettenantriebe können synchronisiert angetrieben werden, beispielsweise dadurch, daß die Antriebskettenräder über eine gemeinsame Welle angetrieben werden.

Der Stellantrieb kann aber auch anders realisiert werden. Beispielsweise kann es sich bei dem Stellantrieb um einen hydraulischen Antrieb handeln oder es kann eine Zahnstange, ein Zahnriemen oder eine Kette am Grundrahmen befestigt werden und mit einem angetriebenen Ritzel kämmen, das am Schubblock bzw. an jedem Schubblock angebracht ist. Zur Bewegung der Schubblöcke kommen auch umlaufende Seilzüge in Frage, die vorzugsweise mit mindestens zwei Rollen so ausgeführt sind, daß das eine Ende des Seils aufgewickelt und das andere Ende gleichzeitig abgewickelt wird.

Es ist nicht zwingend erforderlich, für jeden Schubblock einen Antrieb vorzusehen, es genügt schließlich, wenn an einem Schubblock ein Antrieb vorgesehen ist und an einem anderen Schubblock oder an anderen Schubblöcken Führungseinrichtungen vorgesehen sind, die an Führungsstangen oder Schienen am Grundrahmen geführt sind. Egal welcher Stellantrieb gewählt wird, ist dieser vorzugsweise so ausgelegt, daß der Spiegel in einer angesteuerten Position verbleibt. Dies kann dadurch erreicht werden, daß der Stellantrieb so ausgelegt ist, daß er nicht umkehrbar ist, d.h. so, daß der Motor den Parabolspiegel antreiben kann, Kräfte, die auf den Parabolspiegel ausgeübt werden, jedoch nicht zu einer Verstellung desselben führen können. Dies kann auch dadurch realisiert werden, daß der Antriebsmotor als Bremse wirkt oder eine Bremse aufweist, um den Stellantrieb in der jeweils angefahrenen Position zu halten. Bevorzugt wird zur Fixierung der Schubblöcke die Selbsthaltung genutzt, die bspw. in einem Schneckengetriebe erreichbar ist.

Besonders günstig ist es, wenn eine Feder oder mehrere Federn, beispielsweise in Form eines Gummiseils oder mehrerer Gummiseile vorgesehen ist bzw. sind, um die Stellkraft des zum Schwenken des Parabolspiegels vorgesehenen Motors bzw. der zum Schwenken des Parabolspiegels vorgesehenen Motoren zu unterstützen. Hierdurch kann die vom Motor bzw. von den Motoren zu liefernde Stellkraft herabgesetzt werden, so daß der Motor bzw. die Motoren und die gesamte Konstruktion leichter gebaut werden können. Für die Schwenkbewegung des Parabolspiegels kann auf vorteilhafte Weise ein herkömmlicher Garagentorantrieb verwendet werden, wodurch der Stellantrieb preisgünstig realisiert werden kann.

Besonders günstig ist es, wenn der Receiver an einem Ende eines Tragarms getragen ist, dessen anderes Ende im Bereich der unteren Kante des Parabolspiegels angelenkt ist, vorzugsweise an der genannten Tragstruktur, und beim Hinaufschwenken des Parabolspiegels mit aufschwenkbar ist. Das Hochschwenken des Receivers kann einfach durch Anlage des Tragarms an der genannten Tragstruktur erfolgen. Das heißt, es ist keine getrennte Stelleinrichtung für den Receiver erforderlich. Diese Anordnung hat darüber hinaus den Vorteil, daß der Receiver im heruntergeschwenkten Zustand des Parabolspiegels stets von diesem abgedeckt und geschützt ist. Bei schweren Receivern kann ein Seil zwischen dem Receiver und der Innenseite des Spiegels gespannt werden, so daß die hohen Hebekräfte aufgenommen werden.

Es ist außerdem möglich, eine oder mehrere Federn, beispielsweise in Form eines Gummiseils oder mehrerer Gummiseile vorzusehen, die vom Receiver zum vorderen Teil des Grundrahmens verläuft bzw. verlaufen und im heraufgeschwenkten Zustand des Parabolspiegels gespannt ist bzw. sind. Hierdurch wird eine Drehmoment am Parabolspiegel erzeugt. Dies hat den Vorteil, daß die Federn oder Gummiseile, wenn der Parabolspiegel maximal aufgeklappt ist, einen Großteil der Haltekräfte aufnehmen und beim Herunterschwenken des Parabolspiegels werden die Stellantriebe unterstützt. Gerade für die Bewegung des Parabolspiels aus dem maximal heraufgeschwenkten Zustand in einen weiter nach unten geschwenkten Zustand wird eine verhältnismäßig große Stellkraft benötigt, die jetzt aufgrund der Federkraft nur zum Teil vom Stellantrieb erzeugt werden muß.

Weiterhin werden der Receiver und die Lenkarme in ihre Sollposition im aufgeklappten Zustand des Parabolspiegels festgehalten.

Auch ist es möglich, eine oder mehrere Federn, beispielsweise in Form eines Gummiseils oder mehrerer Gummiseile vorzusehen, die von der Vorderseite des Grundrahmens zu einer im Bereich der im Betrieb unteren Kante des Parabolspiegels angeordnete Tragstruktur für den Parabolspiegel verläuft bzw. verlaufen und im heruntergeschwenkten Zustand des Parabolspiegels gespannt ist bzw. sind. Diese Federn, die im heraufgeschwenkten Zustand des Parabolspiegels nicht mehr gespannt sind, liefern bei der anfänglichen Heraufschwenkbewegung des Parabolspiegels eine Kraft, die den Stellantrieb unterstützt und auch hier die maximal erforderliche Stellkraft herabsetzt mit den bisher erwähnten Vorteilen.

Die äußere Form des Parabolspiegels ist im Prinzip unkritisch. Dieser kann in Draufsicht in etwa halbkreisförmig, rechteckig oder rechteckig mit abgerundeten Ecken sein, wobei im letzteren Fall insbesondere die der unteren Kante abgewandten Ecken abgerundet sind. Eine in Draufsicht ersichtliche leichte Krümmung der unteren Kante wird in seinem Ausmaß durch die Bodenfreiheit im Bereich des Grundrahmens begrenzt. Besonders bevorzugt ist es, wenn der Parabolspiegel eine Gestalt aufweist, die sich durch die Schneidkurve zwischen einem halbparabolischen Drehkörper und einer quer zur Drehachse des Drehkörpers stehenden Ebene ergibt. Diese Konstruktion stellt sicher, daß der Parabolspiegel die kleinstmögliche Bautiefe aufweist.

Besonders bevorzugte Möglichkeiten der Herstellung des Parabolspiegels ergeben sich aus den Ansprüchen 35, 38 und 59. Besonders günstig ist es, wenn ein flüssiges Metall, beispielsweise Zink, als Wärmeträger im Receiver benutzt wird. Es können ebenso geschmolzene Salze, Thermoöl, Wasser oder ein Heißgasmotor (Stirlingmotor) direkt zum Einsatz kommen. Mit Hilfe eines Sekundärreflektors könnte die solare Strahlungsenergie direkt auf einen Speicher konzentriert werden, der sich in oder auf der Mitte des Grundrahmens befindet. Hier könnte Zink ein besonders gutes Speichermedium sein, da es bei 420°C schmilzt und 111 kJ/kg beim Phasenwechsel aufnimmt. Zur direkten Stromerzeugung können auch Solarzellen im Brennpunkt angebracht werden.

Besonders bevorzugte Ausführungsformen der Erfindung sind den Patentansprüchen zu entnehmen.

Die Erfindung wird nachfolgend näher erläutert anhand von zwei Ausführungsbeispielen, die in den beigefügten Zeichnungen gezeigt sind. Es zeigen:
- Figur 1: eine Draufsicht auf ein erfindungsgemäßes konzentrierendes Solarenergiesystem mit heruntergeschwenktem Parabolspiegel,
- Figur 2: eine Ansicht des erfindungsgemäßen konzentrierenden Solarenergiesystems der Figur 1 in Pfeilrichtung II der Figur 1 gesehen, d.h. von hinten gesehen.
- Figur 3: eine Seitenansicht des erfindungsgemäßen Solarenergiesystems der Figur 2 in Pfeilrichtung III gesehen,
- Figur 4: eine Vorderansicht des erfindungsgemäßen Solarenergiesystems gemäß Figur 1 bis 3 im hinaufgeschwenkten Zustand,
- Figuren 5A - 5E: eine Skizzenfolge zur Erläuterung des Hinaufschwenkens des Parabolspiegels des Solarenergiesystems gemäß Figuren 1 - 4,
- Figuren 6A - 6C: eine Skizzenreihe ähnlich der Skizzenreihe 5A-5E, jedoch für eine weitere besonders bevorzugte Ausführungsvariante des erfindungsgemäßen Solarenergiesystems,
- Figuren 7 und 8: zwei weitere erfindungsgemäße Beispiele eines Parabolspiegels mit eingebauten versteifenden Dreiecksrahmen,
- Figuren 9A und 9B: Zeichnungen entsprechend den Fig. 5A und 5D zur Erläuterung einer weiteren Variante des erfindungsgemäßen Solarenergiesystems,
- Figuren 10A und 10B: Zeichnungen entsprechend den Zeichnungen 6A und 6C zur Erläuterung einer weiteren Variante des Solarenergiesystems,
- Figuren 11A - 11J: Zeichnungen zur Erläuterung verschiedener Möglichkeiten zur Realisierung eines erfindungsgemäßen Parabolspiegels,
- Figuren 12 A - 12D: Zeichnungen, die verschiedene Möglichkeiten angeben, wie ein erfindungsgemäßer Parabolspiegel aus Segmenten hergestellt werden kann,

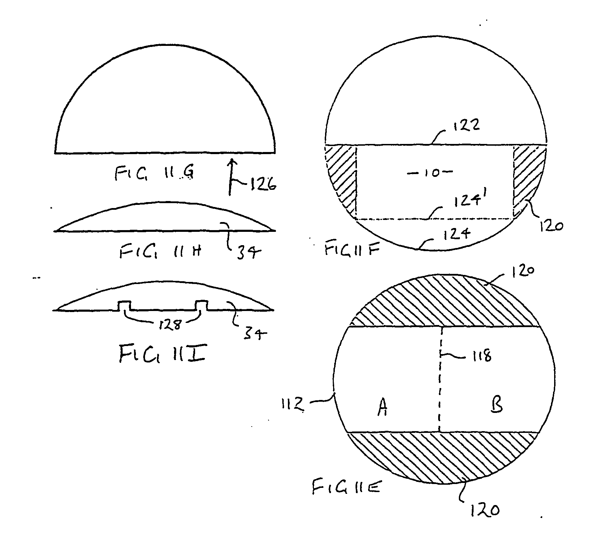

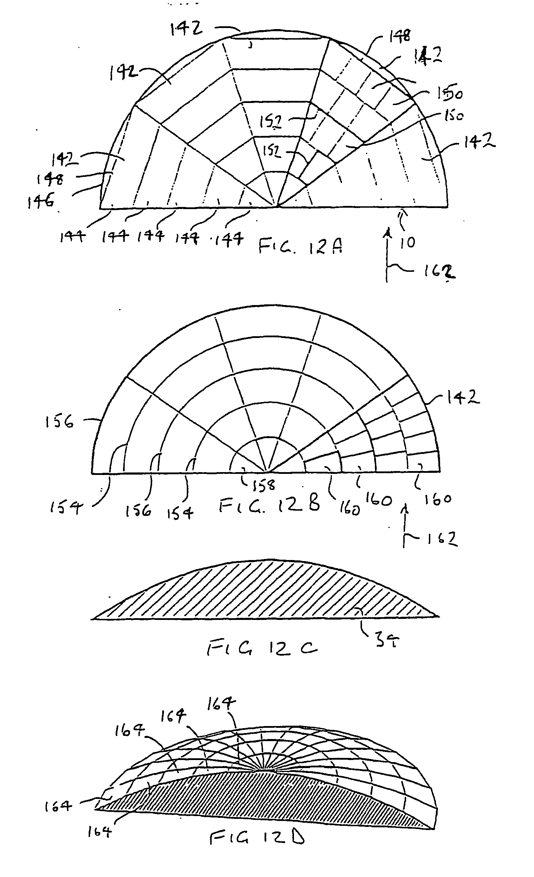

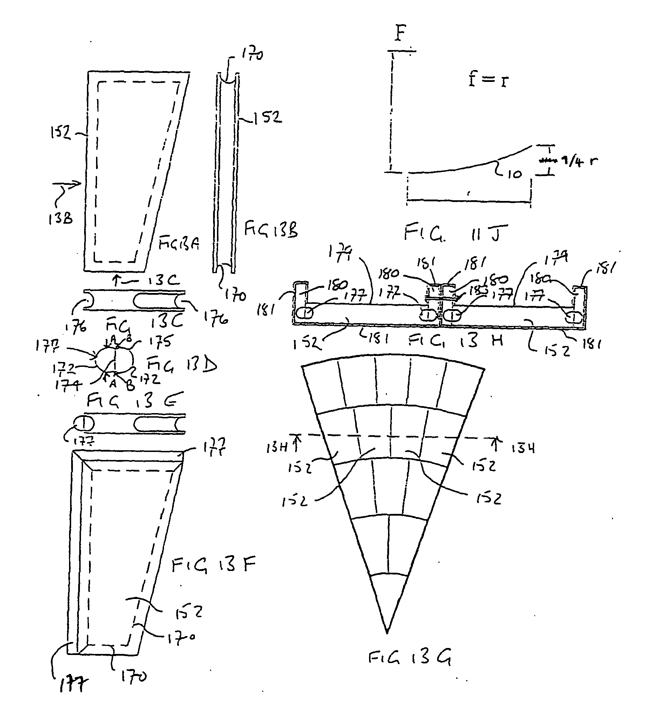

- Figuren 13 A - 13H: Zeichnungen, die eine erfindungsgemäße technische Möglichkeit zur Herstellung eines Parabolspiegels aus einzelnen, aus Extruderschaum bestehenden Segmenten zeigen, wobei die Figuren 13B und 13C Ansichten des Segments der Figur 13A entsprechend den Pfeilen 13B bzw. 13C zeigen, Figur 13D ein Verbindungselement darstellt, das ebenfalls aus extrudiertem Polystyrol- oder Polyurethanschaum besteht und ggf. aus dem Segment gemäß Figur 13A herausgeschnitten werden kann, Figur 13E, die der Darstellung der Fig. 13C entspricht, jedoch mit eingesetztem Verbindungselement nach Figur 13D, Figur 13F eine Draufsicht auf ein Segment ähnlich der Figur 13A, jedoch mit erfindungsgemäß angesetzten Verbindungselementen nach Figur 13D, Figur 13G eine Darstellung entsprechend dem unteren rechten Sektor 142 gemäß Fig. 12B und die Figur 13H die Verbindung zweier kleinerer Segmente entsprechend der Schnittebene 13H-13H gemäß Fig. 13G aneinander,
- Figur 14: eine Draufsicht einer erfindungsgemäßen Anordnung ähnlich Figur 1, jedoch ohne Parabolspiegel und die damit verbundenen Lenkgestänge, um eine Möglichkeit der horizontalen Nachführung darzustellen,
- Figuren 15A bis 15C: Zeichnungen, die einen erfindungsgemäßen Antrieb zeigen, der für die vertikale Nachführung des erfindungsgemäßen Parabolspiegels verwendet werden kann, wobei die Figur 15B eine Schnittzeichnung entsprechend der Schnittebene 15B-15B in Figur 15A zeigt und die Figur 15C eine Draufsicht auf die Figur 15A in Pfeilrichtung 15C darstellt;
- Figur 16: eine Draufsicht entsprechend der Figur 15C zeigt, jedoch von einer weiteren erfindungsgemäßen Anordnung für die vertikale Nachführung des Parabolspiegels, und
- Figuren 17, 18A, 18B, 19A, 19B, 19C, 20A, 20B, 21, 22A, 22B und 22C: Abwandlungen der bisher beschriebenen Konstruktionen zeigen, die als besonders vorteilhaft empfunden werden.

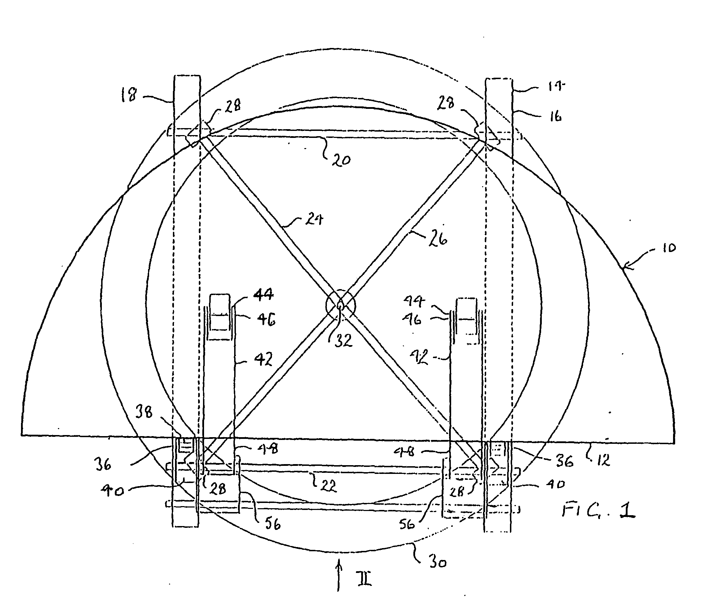

Die Figur 1 zeigt zunächst eine Draufsicht auf die Rückseite eines erfindungsgemäßen Parabolspiegels 10 im heruntergeschwenkten Zustand.

Aus dieser Darstellung erkennt man die im Betrieb untere, in Draufsicht geradlinig erscheinende Kante 12 des Parabolspiegels sowie dessen im wesentlichen halbkreisförmige Gestalt. Der Parabolspiegel 10 ist an einem Grundrahmen 14 in noch zu erläuternder Weise angebracht, wobei der Grundrahmen aus zwei Längsträgern 16 und 18 besteht, die mittels Querträger 20 und 22 zu einem in etwa quadratischen Rahmen ergänzt sind, wobei zwei Diagonalstreben 24 und 26 für die notwendige Stabilität des Grundrahmens sorgen. An den vier Ecken des Grundrahmens im Bereich der Verbindungspunkte zwischen den Eckträgern 16, 18 und den Querträgern 20, 22 befinden sich vier Räder 28, die an einem kreisförmigen Fundament 30 laufen können, um somit eine Drehung des Grundrahmens um die senkrechte Achse 32 zu ermöglichen.

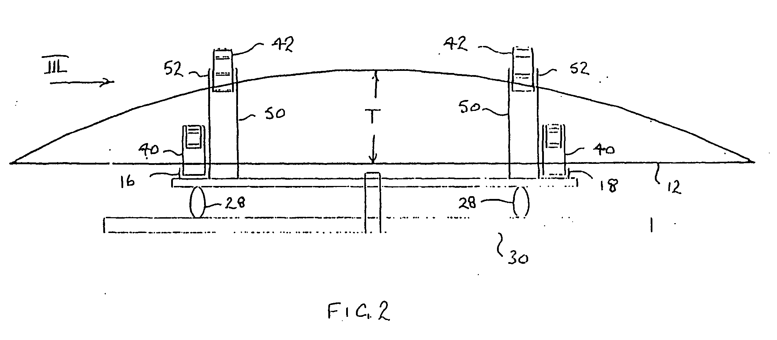

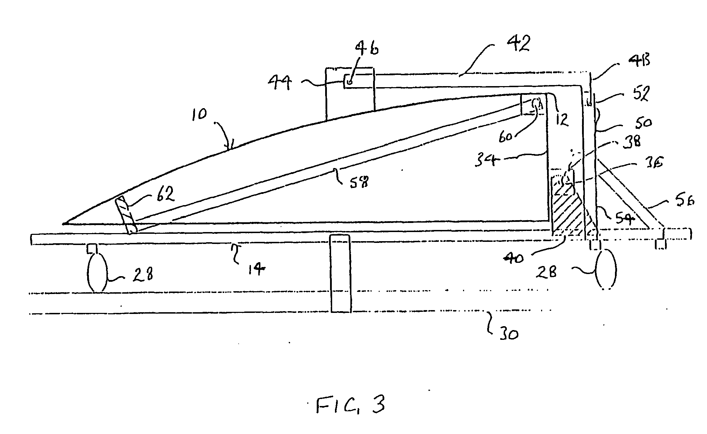

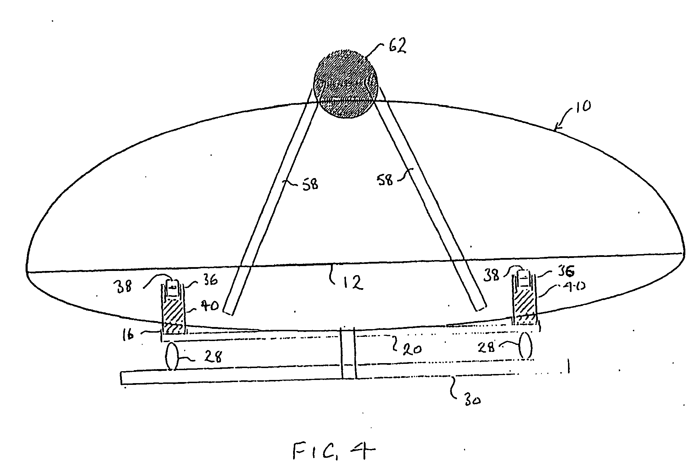

Aus der Figur 2 ist zu erkennen, daß der Parabolspiegel 10 im heruntergeschwenkten Zustand und in Vorderansicht eine relativ flache, gekrümmte Gestalt aufweist, dessen maximale Tiefe in der Mitte mit T angegeben ist.

Bei einer praktischen Ausführungsform kann die Länge der unteren Kante 12 des Spiegels beispielsweise etwa 8 m betragen, so daß die radiale Höhe des Spiegels etwa 4 m ist und die maximale Bautiefe T gemäß Figur 2 etwa 100 cm beträgt. Es ist aus Figur 2 ohne weiteres ersichtlich, daß die Gesamtkonstruktion im heruntergeschwenkten Zustand eine sehr niedrige Bauhöhe aufweist und daß der Grundrahmen sich entsprechend niedrig bauen läßt.

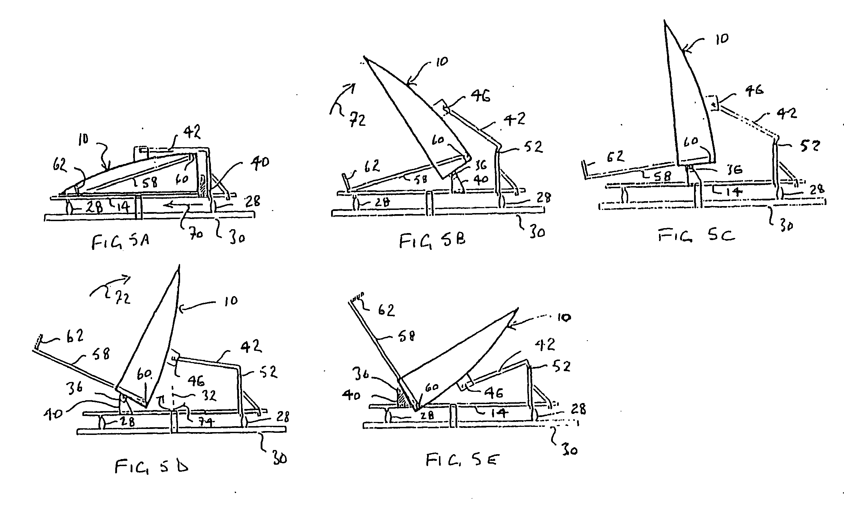

Die Seitenansicht gemäß Figur 3 läßt auch erkennen, daß eine Tragstruktur 34 an der unteren Kante 12 des Parabolspiegels anschließt und durch die Verbindung des Parabolspiegels entlang der gesamten Länge der Tragstruktur 34, d.h. entlang der gesamten gekrümmten Fläche in Figur 2, der Parabolspiegel durch diese Tragstruktur 34 entsprechend versteift wird. D.h. die offene Fläche des Paraboloids wird durch 34 in der dritten Dimension geschlossen und somit erheblich versteift. Bei hohen Stabilitätsanforderungen können speichenartige Verstrebungen oder Seilabspannungen eingesetzt werden.

Die Tragstruktur bzw. Versteifung 34 dient auch der schwenkbaren Aufhängung des Parabolspiegels um die Schwenkachse 36, die durch Stifte definiert ist, die in an der Tragstruktur angebrachten Laschen 38 und in am Grundrahmen 14 verschiebbar geführten Schubblöcken 40 montiert bzw. gelagert sind. Wie aus Figur 1 und Figur 2 hervorgeht, sind in diesem Beispiel zwei Schubblöcke 40 vorgesehen, die jeweils in einem der als U-formige Schiene realisierten Längsträger 16 bzw. 18 angeordnet und zum Hinaufschwenken bzw. Herunterschwenken des Parabolspiegels um die Schwenkachse 36 entlang der jeweiligen U-förmigen Schiene 16, 18 verschiebbar sind, wie aus den Figuren 5A-5E ohne weiteres ersichtlich ist.

Aus der Seitenansicht der Figur 3 sieht man außerdem einen Lenkarm 42, der an seinem einen Ende, dem linken Ende 44 in Figur 3, schwenkbar um die Anlenkachse 46 an der Rückseite des Parabolspiegels in dessen mittlerem Bereich angelenkt ist und an seinem anderen, in Figur 3 rechten Ende 48 an einem Stützpunkt 50 um eine weitere Schwenkachse 52 angelenkt ist. Der Stützpunkt 50 ist von einem Tragpfosten 54 gebildet, der am Grundrahmen 14 befestigt ist und durch eine entsprechende Verstrebung 56 versteift wird. Der Stützpunkt in Figur 3, d.h. die Lage der Schwenkachse 52, ist vorzugsweise nicht unbedingt oberhalb des Grundrahmens. Wichtig ist, daß der Punkt 46 in Fig. 3 in aufgeklapptem Zustand (siehe Fig. 5B bis 5E) stets oberhalb der Linie zwischen 52 und 36 in Fig. 3 bleiben muß, da sonst der Spiegel nicht mehr zugeklappt werden kann. Die Schubbewegung würde sonst ein nach unten gerichtetes Drehmoment erzeugen. Die Höhe des Stützpunkts 52 in Fig. 3 beeinflußt also den maximalen Aufklappwinkel des Spiegels. Dies kann in der Nähe des Äquators zu Problemen führen. Wahrscheinlich ist die optimale Höhe von 52 in Fig. 3 bei der gleichen Höhe 36 in Fig. 3 gegeben. Das muß die Praxis zeigen. Dadurch, daß der Anlenkpunkt 52 in etwa bei der maximalen Höhe des Parabolspiegels im heruntergeschwenkten Zustand sich befindet, ist der Lenkarm 42 zumindest im wesentlichen geradlinig ausgebildet und könnte vollständig gerade ausgebildet werden, wenn der Stützpunkt 52 geringfügig höher plaziert wäre als in Fig. 3 gezeigt. In der Tat sind zwei Lenkarme 42 vorgesehen, wie aus den Figuren 1 und 2 ersichtlich, und sie sind am Hauptrahmen unmittelbar benachbart zu den Schubblöcken 40 angeordnet.

Innerhalb des Parabolspiegels 10 gemäß Figur 3 befinden sich zwei Tragarme 58, von denen nur der eine in Figur 3 ersichtlich ist, wobei jedoch beide Tragarme in Figur 4 zu sehen sind. Jeder Tragarm 58 ist an seinem einen Ende schwenkbar am Parabolspiegel 10 angelenkt, und zwar bei einer Anlenkachse 60 im Bereich des Übergangs zwischen der unteren Kante 12 und der Tragstruktur 34 und ist an seinem anderen Ende mit einem Receiver 62 verbunden, der im heraufgeschwenkten Zustand des Parabolspiegels gemäß Figur 4 sich im Brennpunkt des Parabolspiegels befindet.

Das Hinaufschwenken bzw. Herunterschwenken des Parabolspiegels 10 wird nachfolgend anhand der Figuren 5A-5E näher erläutert, wobei die Figur 5A der Figur 3 entspricht, jedoch nur zu einem kleineren Maßstab. Es handelt sich hier um die Ruhestellung des Parabolspiegels 10, d.h. der vollständig heruntergeklappte Zustand, und es ist aus dieser Figur ersichtlich, daß der Receiver 62 und die Tragarme 58 sowie der gesamte Bereich unterhalb des Parabolspiegels von diesem abgedeckt und geschützt sind. Auch die spiegelnde Oberfläche des Parabolspiegels, auf dessen Unterseite in Figur 5A, ist auf diese Weise in der Ruhestellung geschützt.

Wenn jetzt die Sonne scheint, wird nunmehr für eine Bewegung des Schubblockes 40 in Pfeilrichtung 70 gesorgt, wodurch der Parabolspiegel 10 gezwungen wird, aufgrund der Gestängeanordnung 42, sich in Pfeilrichtung 72 um die Schwenkachse 36 des Schubblockes 40 im Uhrzeigerrichtung hinaufzuschwenken. Der Receiver 62 bleibt während dieser ursprünglichen Schwenkbewegung noch am Grundrahmen (am Querträger 20) liegen, da die Tragarme 58 um die Schwenkachse 60 schwenken, wird jedoch mit der Schwenkachse 60 nach vorne geschoben. Für die Auflage des Receivers kann auch eine Führungsschiene am Grundrahmen angebracht werden und am Receiver Rollen der Gleitschuhe.

Bei fortschreitender Verschiebung des Schubblockes 40 nach links erreicht man dann die Stellung gemäß Figur 5C, wo der Parabolspiegel 10 beinahe aufrecht steht und man sieht, daß in dieser Stellung die Tragarme 58 in Berührung mit der Tragstruktur 34 gekommen sind und daß der Receiver 62 hierdurch bereits leicht angehoben ist. Der Receiver 62 befindet sich nunmehr im Brennpunkt des Parabolspiegels.

Bei fortschreitender Verschiebung der Schubblöcke 40 nach links entlang der Hauptträger 16 und 18 bewegt sich der Parabolspiegel immer mehr nach hinten gemäß Figur 5D und anschließend Figur 5E, welche der maximale Schwenkwinkel des Parabolspiegels 10 darstellt. Es handelt sich bei dieser Schwenkbewegung um die Schwenkachse 36 um die vertikale Nachführung des Parabolspiegels, die notwendig ist, um der jeweiligen Höhe der Sonne zu folgen, damit die maximale Sonnenintensität empfangen und auf den sich im Brennpunkt befindlichen Receiver 62 konzentriert wird.

Wenn die Sonne am nachmittag am Himmel sinkt, wird der Schwenkwinkel durch Verschiebung der Schubblöcke 40 nach rechts aus der maximalen Stellung gemäß Figur 5E zunehmend verkleinert, so daß beispielsweise die Zwischenstellung gemäß Figur 5D und anschließend gemäß Figur 5C erreicht wird und der Sonnenuntergang vom Parabolspiegel gefolgt wird. Während die Drehbewegung um die Schwenkachse 36 für die Nachführung des Parabolspiegels je nach Höhenstellung der Sonne sorgt, sorgt eine gleichzeitig ausgeführte Drehbewegung um die Senkrechtachse 32 (nur in Figur 1 und Figur 5D gezeigt) für die horizontale Nachführung, d.h. die Drehbewegung entsprechend dem Pfeil 74.

Wenn am Ende des Tages oder beispielsweise bei Schnee oder Regen keine ausreichende Sonneneinstrahlung mehr vorhanden ist, wird der vollständig heruntergeschwenkte Zustand gemäß Figur 3 bzw. 5A angefahren und der Parabolspiegel 10 funktioniert nunmehr als Dach.

Es kann eine Mauer oder Auflagefläche der Form des Paraboloids entsprechend so gebaut werden, daß das Paraboloid direkt, flach und vollständig abdichtend aufliegt. An dieser Mauer können auch Verschlüsse angebracht werden, die das Paraboloid unlösbar mit ihr verbinden, so daß das Dach absolut dicht (bis zur Luftdichte!) und sturmfest ist. Das Paraboloid ist so auch gegen Druck von oben, z.B. bei Schneelast gesichert. Kuppeleffekt!

Man kann sich jetzt leicht vorstellen, daß sich unterhalb des Parabolspiegels in Figur 3 ein Schwimmbad oder ein Teil eines Schwimmbads befindet, das unter anderem mit Energie beheizt werden kann, die vom Parabolspiegel gesammelt und an den Receiver 62 fokussiert wird. Es könnte sich aber ebenfalls bei dem Dach in Form des heruntergeschwenkten Parabolspiegels 10 um das Dach eines Hauses bzw. um einen Dachbereich eines Hauses handeln. Im übrigen kann der Spiegel im heruntergeschwenkten Zustand auch für die Beleuchtung des abgedeckten Raumes benutzt werden, denn es ist lediglich notwendig, eine einzige Lichtquelle im Bereich des Brennpunkts des Spiegels, d.h. etwas unterhalb des Bezugszeichens 30 in Figur 3 anzuordnen, um über den Parabolspiegel den Raum relativ gleichmäßig auszuleuchten. Dazu würden sich die inzwischen sehr kostengünstigen Deckenfluter hervorragend eignen.

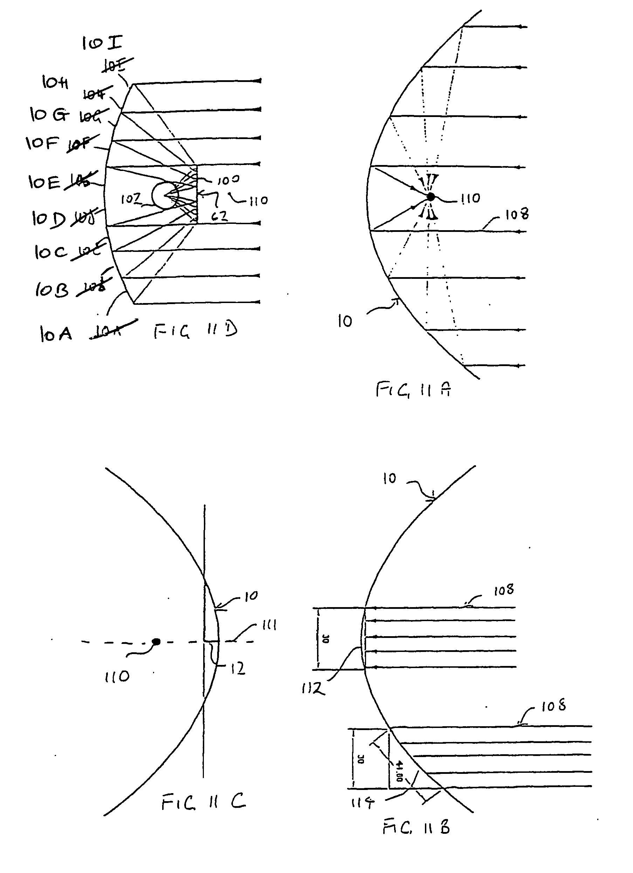

Die Figuren 6A-6C zeigen nunmehr eine alternative Ausführungsform, bei der sowohl die Schubblöcke 40 wie auch die Lenkarme 42 im heruntergeschwenkten Zustand des Parabolspiegels 10 gemäß Figur 6A vollständig unterhalb des Parabolspiegels untergebracht sind und somit bestens geschützt sind. Diese Ausführungsform ist der ersten in fast jeder Hinsicht überlegen und wird daher in der Praxis bevorzugt. Gerade als Hausdach ist diese Konstruktion unschlagbar. Ein rechteckiges Haus kann auch mit zwei kleineren Systemen bedeckt werden, die später mit Bezug auf die Fig. 11E näher beschrieben wird. Bei dieser Ausführungsform können die ungünstigen Hebelverhältnisse in den beiden Extrempositionen (ganz zu und ganz auf) leicht mit einer senkrechten Stange und einem zusätzlichen Seilzug ausgeglichen werden. Die senkrechte Stange wäre bei einer solchen Ausführung im Bereich der gerundeten Kante des Parabolspiegels in Fig. 1 anzuordnen und am Grundrahmen zu befestigen. Das Seil wäre so auszulegen, daß es sich von einer Umlenkrolle oben an der Stange in etwa senkrecht nach unten zu der Mitte der vorderen Kante des Parabolspiegels erstreckt. Durch eine Zugkraft am Seil kann dann der Parabolspiegel zunächst aus der geschlossenen Position angehoben werden bis die Hebelverhältnisse günstiger werden. In der extrem geneigten Position nach Fig. 5E kann das Seil wiederum gezogen werden um die Schließbewegung zu unterstützen. Zwischen den beiden Positionen kann das Seil schlaff werden oder nur leicht vorgespannt bleiben. Die Stange könnte auch als Träger für einen hochgelegenen Flüssigkeitsspeicher mit Schwerkraftumwälzung genutzt werden.

Es werden für die Ausführungsform gemäß Figuren 6A-6C die gleichen Bezugszeichen wie für die Ausführungsform gemäß Figuren 1- 5 benutzt und es gilt für Teile, die das gleiche Bezugszeichen aufweisen, die gleiche Beschreibung wie im Zusammenhang mit den Figuren 1-5, es sei denn, es wird etwas Gegenteiliges gesagt.

Wie aus den Fig. 6A-6C ersichtlich ist, sind die Lenkarme 42, von denen es auch hier zwei gibt (wobei nur der eine in den Figuren ersichtlich ist) an ihrem einem Ende an der Innenseite des Parabolspiegels 10 bei 46 und an ihrem anderen Ende bei 52 am Grundrahmen 14 schwenkbar angelenkt. Die Schubblöcke 40 befinden sich nunmehr auf der "inneren" Seite der Tragstruktur 34. Für diesen Fall müssen die in Fig. 11I dargestellten Durchbrüche 128 in die Tragstruktur 34 vorgesehen werden, da sich beim Aufschwenken des Paraboloids 10 die Schubblöcke 40 durch die Tragstruktur 34 hindurchbewegen, d.h. auf der linken Seite dieser Tragstruktur in Figur 6A. Auch bei dieser Ausführungsform wird der Receiver 62 von zwei A-förmig angeordneten Tragarmen 58 getragen, die an jeweiligen Anlenkachsen 60 im Bereich der im Betrieb unteren Kante 12 des Parabolspiegels und dessen Verbindung zu der Tragstruktur 34 schwenkbar angelenkt sind.

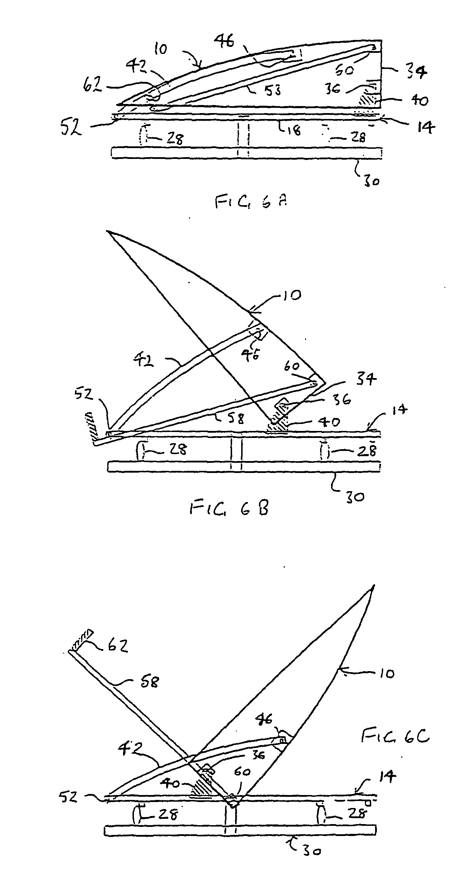

Die Position der einzelnen Aufhängungspunkte muß folgenden Kriterien genügen, um das Auf- und Zuklappen zu ermöglichen. Bei der in Fig. 1 bis Fig. 5 dargestellten Variante muß die Strecke zwischen Fig. 3:46 und Fig. 3:36 stets kürzer sein als die Strecke zwischen Fig. 3:46 und dem Fußpunkt der Verstrebung Fig. 3:50 auf dem Grundrahmen. Bei der besonders bevorzugten Variante in Fig. 6 muß die Strecke zwischen Fig. 6B:46 und Fig. 6B:36 stets kürzer sein als die Verbindung zwischen Fig. 6B:46 und dem Punkt Fig. 6B:52.

Sind diese Streckenverhältnisse nicht gegeben, so kann ist die Drehung des Paraboloids um Punkt 46 begrenzt bzw. der Spiegel könnte in der Ruheposition nicht vollständig geschlossen werden.

In dieser Ausführungsform sind die Lenkarme 42 leicht gekrümmt, was aber nicht zwingend erforderlich ist. Auch bei der Ausführungsform gemäß Figur 6A-6C erfolgt die Aufstellung des Parabolspiegels durch Verfahren der Schubblöcke 40 nach links bzw. nach rechts, je nachdem, ob der Spiegel hinaufgeschwenkt oder heruntergeschwenkt werden soll.

Zusammengefaßt kann folgendes gesagt werden. Es wird in diesem Beispiel ein halbkreisförmiges, selbsttragendes Reflektorparaboloid 10 so in einem oder mehreren Punkten 52 und in einem oder mehreren weiteren Punkten 36 aufgehängt, daß eine Bewegung der die Punkte 36 tragenden Schubblöcke 40 (gleiche Anzahl wie die Befestigungspunkte 36) entlang einer durch die Träger des Grundrahmens gebildeten Führung das scherenförmige Aufklappen des Reflektors 10 bewirkt. Die Schubblöcke 40 können entweder einzeln oder zusammengefaßt angetrieben werden. Der Antrieb kann beliebig erfolgen. Speziell aber durch eine Gewindestange, die parallel zur Schiene 16 bzw. 18 verläuft, wobei im Schubblock 40 ein Gewinde angebracht ist und die Bewegung durch Drehen der Gewindestange erfolgt. Der Antrieb kann aber auch durch Zahnstange, Zahnriemen oder Kette, die parallel zur Schiene 16 bzw. 18 angebracht ist und einem angetriebenen Ritzel, das am Schubblock 40 angebracht ist, erreicht werden.

Die Befestigungspunkte 52 und/ oder die Befestigungspunkte 60 befinden sich innerhalb des Reflektorparaboloids. Dadurch wird ein besonders kompakter Aufbau erreicht. Die gesamte Mechanik kann unterhalb des Paraboloids angebracht werden und ist in der Ruheposition geschützt.

Die Befestigung des Receivers 62 kann bei diesen Systemen auch besonders einfach gelöst, werden. Es genügt die bewegliche Aufhängung im inneren Eck des Paraboloids 10. Beim Öffnen des Systems schleift der Receiver einfach entlang des Bodens oder entlang einer einfachen Latte, bis er von der unteren Kante des Paraboloids hochgehoben wird und sich darin automatisch im Fokus des Paraboloids befindet.

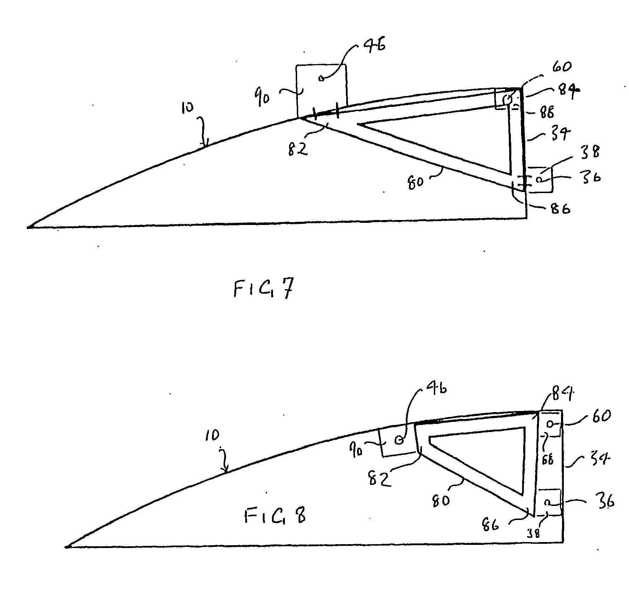

Die Figuren 7 und 8 zeigen jeweils eine Dreiecksverstrebung 80, die der Versteifung des Parabolspiegels 10 dient, wobei in Figur 7 die Dreiecksverstrebung ausgelegt ist, um mit einer Ausführungsform nach den Figuren 1 und 5 verwendet zu werden, während in Figur 8 die Verstrebung an die Ausführung gemäß Figur 6 angepaßt ist. Es sind sowohl bei der Ausführung gemäß Figur 7 als auch bei der Ausführung gemäß Fig. 8 jeweils zwei Dreiecksverstrebungen für jeden Parabolspiegel vorgesehen, wobei die Anzahl der Dreiecksverstrebungen, die zur Anwendung kommen, entsprechend der Anzahl von Lenkarmen 42 gewählt wird.

Bei beiden Ausführungsformen kommen die drei Spitzen des Dreiecks 82, 84 und 86 an Stellen zu liegen, die den jeweiligen Schwenkachsen 46, 60 bzw. 36 benachbart angeordnet sind. Die Dreiecksverstrebungen sind vorzugsweise an den Laschen bzw. Blöcken 38, 88 und 90 befestigt, die die Schwenkachsen 36, 60 bzw. 46 aufnehmen und sind darüber hinaus an den Parabolspiegel 10 bzw. an die entsprechende Tragstruktur 34 angebondet bzw. befestigt. Durch die Dreiecksverstrebungen sind die Stellungen der Schwenkachsen 36, 46 und 60 in Bezug aufeinander eindeutig festgelegt.

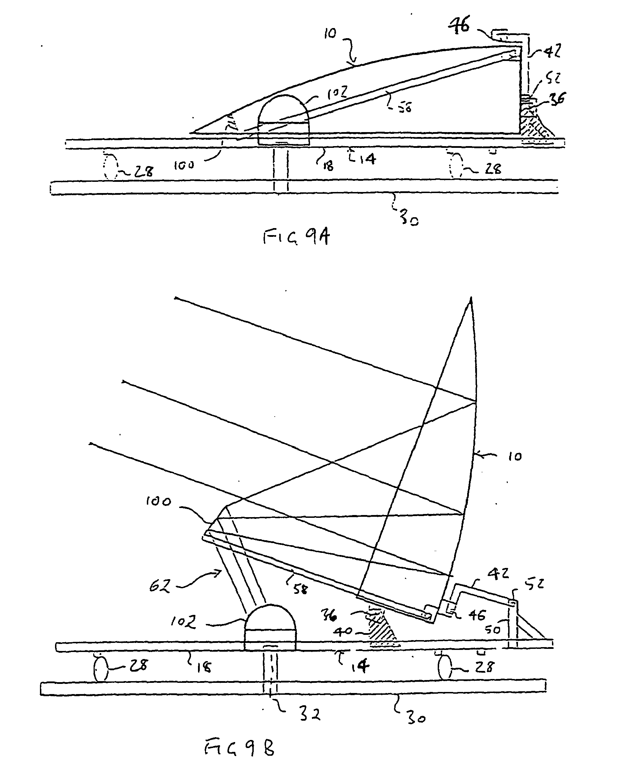

Die Figuren 9A und B zeigen eine erfindungsgemäße Anordnung, die der Anordnung gemäß Figur 1 bis 5 im wesentlichen entspricht, weshalb für die gleichen Bauteile die gleichen Bezugszeichen verwendet werden und die bisherige Beschreibung auch für die entsprechenden Teile gilt. Unterschiedlich zu der Ausführung gemäß Fig. 1 bis 5 ist an sich hauptsächlich die Ausbildung des Receivers 62, der nunmehr aus zwei Teilen besteht, nämlich einem Spiegel 100, der sich vor, in oder hinter dem Brennpunkt des Parabolspiegels befindet und einem Kollektor 102, der die vom Spiegel 100 reflektierten Strahlen empfängt und daher den eigentlichen Receiver bildet, der bei der bisherigen Ausführungsform direkt im Brennpunkt des Parabolspiegels angeordnet wurde. Es kann sich bei dem Spiegel 100 ebenfalls um einen Parabolspiegel oder sphärisch gekrümmten Spiegel handeln. Man merkt, daß bei dieser Ausführungsform der Kollektor 102 auf der Drehachse 32 des Grundrahmens 14 angeordnet ist, so daß er stets die gleiche Orientierung zum Spiegel 100 aufweist und mit dem Grundrahmen um die Achse 32 dreht. Dies gilt unabhängig von der jeweiligen Stellung des Parabolspiegels. Die Winkelstellung des Spiegels 100 muß zu diesem Zweck entsprechend gewählt werden oder mit der vertikalen Sonnennachführung automatisch so verändert werden, daß am Receiver immer derselbe Punkt bestrahlt wird. Außerdem ist die Anordnung der Lenkarme 42 in Fig. 9A und 9B etwas anders realisiert als in den Figuren 1 bis 5.

Aus der Figur 9A sieht man einen besonderen Vorteil dieser Ausführungsform, nämlich daß sowohl der Spiegel 62 als auch der Kollektor 102 vollständig durch den nach unten geschwenkten Parabolspiegel 10 abgedeckt, d.h. geschützt ist.

Besonders günstig ist es wenn, abweichend von der Darstellung gemäß Fig. 9, der Reflektor 100 hinter dem Brennpunkt des Parabolspiegels unterhalb der Armen 58 angeordnet ist, da er dann die auf den Parabolspiegel einfallende Strahlen nicht im Wege steht und der Wirkungsgrad hierdurch höher ausfällt. Der Reflektor muß dann die vom Parabolspiegel kommenden Strahlen auf den Kollektor ausreichend konzentrieren bzw. verteilen. Der Receiver 62 kann aus dem gleichen Grund mit Vorteil hinter dem Brennpunkt unterhalb der Arme 58 angeordnet werden, d.h. wenn nur ein Kollektor und kein Reflektor zur Anwendung gelangt. Der Receiver kann dann mit Vorteil an den Armen schwenkbar angelenkt sein und so ausgelegt werden, daß er bei der Bewegung in die geschlossene Position (Fig. 5A) und aus dieser Position ein- bzw. ausgeklappt wird, wodurch sich eine sehr kompakte Anordnung ergibt.

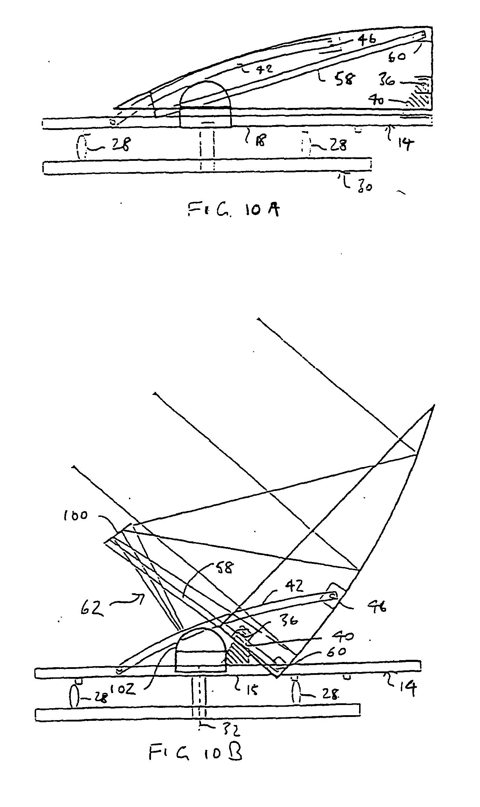

Die Figuren 10A und 10B zeigen eine weitere erfindungsgemäße Anordnung, die starke Ähnlichkeit mit der Anordnung gem. Fig. 9A und 9B hat, jedoch entsprechend der konkreten Auslegung der Figur 6 realisiert ist, d.h. daß bei dieser Ausführungsform die Lenkarme 42 sich innerhalb des Parabolspiegels befinden.

Da die Receiveranordnung 62 bei der Figur 10-Ausführungsform identisch ist zu der der Figuren 9A und 9B, ist eine weitere Erklärung nicht notwendig, stattdessen gilt die Beschreibung der Figuren 9A und 9B für die Ausführungsform gemäß Figuren 10A und 10B.

Die Figuren 11A bis 11J dienen der Erläuterung der Auswahl der Form des Paraboloids.

Bezugnehmend auf Figur 11A wird zunächst das Grundprinzip eines Parabolspiegels gezeigt. Hier werden eingehende parallele Strahlen 108, d.h. die Strahlen, die von der Sonne kommen und aufgrund der Entfernung der Sonne als parallele Strahlen 108 betrachtet werden können, stets auf den Brennpunkt 110 des Parabolspiegels 10 gerichtet.

Die Figur 11B macht deutlich, daß der mittlere Bereich des Parabolspiegels, d.h. dort, wo die parallelen Lichtstrahlen 108 sich zumindest im wesentlichen senkrecht auf den Oberflächenbereich 112 des Parabolspiegels 10 fallen, ein wirksamerer Bereich ist im Vergleich zu einem Außenbereich 114 der gleichen Abmessung, wo die eingehenden parallelen Strahlen 108 unter einem deutlichen Winkel auf die Oberfläche des Spiegels fallen. Hier entsteht ein geometrisch gegebener Verlust.

Die Energiemenge bei den beiden Gruppen von Lichtstrahlen 108 ist die gleiche. Bei den Strahlen 108, die auf den mittleren Bereich 112 des Parabolspiegels fallen, wird Energie in einem Bereich empfangen, der eine Breite von 30 beliebigen Einheiten aufweist. Hierfür wird eine Fläche des Parabolspiegels benötigt, die sich ebenfalls über eine Breite von etwa 30 beliebigen Einheiten erstreckt. Bei den parallelen Strahlen 108, die unten auf den Bereich 114 des Parabolspiegels auftreffen, muß der entsprechende Bereich des Parabolspiegels jedoch eine Breite von etwa 41,80 Einheiten aufweisen. Mit anderen Worten, wird mehr Reflektorflächenbereich 114 benötigt als im Bereich 112, um die gleiche einfallende Lichtmenge wirksam zu reflektieren. Es ist somit wirtschaftlicher, einen mittleren Bereich des Parabolspiegels zum Zwecke der Erfindung auszuwählen als einen Bereich, der weiter außen liegt, wo die Strahlen schräg auf die Spiegelfläche einfallen.

Die Figur 11C zeigt beispielsweise wie ein Parabolspiegel 10 mit der Form, die in den bisherigen Figuren gezeigt ist, aus dem mittleren Bereich des Parabolspiegels gemäß Figur 11A bzw. 11B gebildet werden kann. Es ist besonders vorteilhaft, wenn der Brennpunkt 110 in etwa in der horizontalen Ebene 111 in Fig. 11C liegt und dabei mit der unteren Kante 12 ausgerichtet ist, und zwar deshalb, weil der Receiver dann in einer günstigen Stellung angeordnet werden kann.

Figur 11D macht deutlich, daß der Parabolspiegel nicht unbedingt als kontinuierliches Paraboloid realisiert werden muß, sondern daß mehrere Segmente, d.h. Spiegelfacetten 10A bis 10I zusammengesetzt werden können, um einen wirksamen Parabolspiegel zu erzeugen. Die Figur 11D zeigt außerdem die Verwendung eines Receivers 62, bestehend aus einem Spiegel 100 und einem Kollektor 102 entsprechend den Ausführungsformen der Figuren 9A, 9B bzw. 10A, 10B und zeigt außerdem wie bei diesem Beispiel der Reflektor 100 eine ebene Spiegelfläche aufweisen kann und darüber hinaus innerhalb des Brennpunktes 110 des durch die Segmente 10A bis 10E realisierten Parabolspiegels angeordnet werden kann. Dies hat den Vorteil, daß die Abmessung zwischen dem Spiegel 100 und dem Parabolspiegel 10A bis 101 gegenüber den Ausführungen ohne Spiegel 100, wo der Receiver direkt im Brennpunkt 110 steht, verkürzt ist, was für die Wirksamkeit des Parabolspiegels und die kompakte Anordnung der Bauteile bei herunter geklappten Parabolspiegel sehr nützlich ist.

Die Figur 11E zeigt wie man einen Parabolspiegel mit annähernd rechtekkiger Form auf den mittleren Bereich eines Rotationsparaboloids abbilden kann. D.h. die zwei schraffierten, in etwa D-förmigen Bereiche oberhalb und unterhalb des mittleren Bereiches 112 werden "weggeschnitten", d.h. eigentlich gar nicht erst hergestellt.

Die gestrichelte Linie 118 deutet auf eine weitere Möglichkeit den mittleren Bereich 112 in zwei Hälften A und B zu unterteilen, die dann jeweils zum Zwecke der Erfindung benutzt werden können, und zwar gegebenenfalls auch benachbart zueinander angeordnet.

Die Figur 11 F zeigt eine weitere Möglichkeit, einen in Draufsicht in etwa rechteckigen Parabolspiegels zu erhalten. Auch hier werden die mit Schraffur versehenen Bereiche 120 nicht benutzt, sondern nur der nicht schraffierten Bereich 10 unterhalb der Mittellinie 122, wobei die in Figur 11F gekrümmte untere Kante 124 des Parabolspiegels 10 falls erwünscht anders geschnitten werden kann, beispielsweise entsprechend der gestrichelten Linie 124'. Die obere Hälfte des Parabolspiegels gemäß Figur 11F, d.h. der halbkreisförmige Bereich oberhalb der Mittellinie 122 wird normalerweise auch nicht realisiert, sondern dient lediglich der Darstellung wie ein Parabolspiegel 10 im Bezug auf einen Parabolspiegel mit kreisrundem Umfang gewählt werden kann.

Die Figur 11G zeigt aber, daß auch der Bereich oberhalb der Linie 122 im Prinzip als Parabolspiegel in Frage käme, wobei die Figur 11H eine Ansicht in Pfeilrichtung 126 zeigt, die in der Praxis mit der Tragstruktur 34 ausgefüllt wird, wobei die Figur 11I zeigt, wie Ausschnitte 128 in der Tragstruktur 34 möglich sind, beispielsweise um den Parabolspiegel im Vergleich zu Fig. 3 tiefer anzuordnen, so daß die Balken 16 und 18 mindestens teilweise in die Ausschnitte 128 aufgenommen werden. Auch können solche Ausschnitte 128 nützlich sein, um eine ausgeprägte Schwenkbewegung des Parabolspiegels um die Schwenkachse 36 zu ermöglichen, ohne daß es zu Kontakt zwischen dem Parabolspiegel und den Schubblöcken 40 bzw. Balken 16, 18 kommt.

Schließlich zeigt die Figur 11J wie die Verhältnisse bei der Krümmung des Spiegels am günstigsten zu wählen sind.

Im gewählten Beispiel ist r = 400 cm und die Tiefe T = r/4 = 100 cm. Dieses Verhältnis ist wichtig, da es direkt das Verhältnis zwischen Apertur (Schatten auf senkrechte Ebene) und Spiegelfläche bestimmt. Bei einem Verhältnis von T=r/4 ist die Spiegelfläche nur etwa 10 % größer als die Apertur. Bei sehr großen Spiegeln kann wegen der besseren Statik des selbsttragenden Paraboloids ein kleineres Verhältnis gewählt werden.

In der Fig. 11J ist f die Brennweite des Parabolspiegels gleich dem Radius r des Parabolspiegels. Diese Auslegung ist sehr vorteilhaft, weil sie sicherstellt, daß der Receiver 62 und gegebenenfalls die Lenkarme 42 im heruntergeschwenkten Zustand mit abgedeckt sind und daß die Krümmung des gesamten mittleren Bereichs nicht zu stark ist.

Die Figuren 12A bis 12D zeigen wie der Parabolspiegel aus einzelnen Elementen bzw. Segmenten zusammengesetzt werden kann. Hier wird zunächst von einer in Draufsicht halbkreisförmigen Gestalt des Parabolspiegels ausgegangen. Es versteht sich aber, daß der Außenumriß des Parabolspiegels eigentlich beliebig gewählt werden kann, beispielsweise entsprechend den verschiedenen Beispielen der Figuren 11E, 11F und 11G.

Die Figur 12A zeigt zunächst, daß der Parabolspiegel 10 aus fünf aneinander angeordneten sektorförmigen Bereichen 142 "Großsegmenten" zusammengesetzt werden kann. Dabei kann jedes Segment 142 aus einem Stück bestehen oder es kann, beispielsweise, selbst aus fünf Einzelstükken 144 zusammengesetzt werden, wie für das unterste Segment auf der linken Seite von Figur 12A gezeigt ist. Dabei kann die linke Kante des Segments 140 an der linken Seite entweder gekrümmt, wie bei 146 angedeutet, oder gerade, wie bei 148 gezeigt, gewählt werden. Auch können die einzelnen Stücke 144 weiter unterteilt werden und aus den verschiedenartigen Segmenten 150 zusammengesetzt werden, die auf der rechten Seite der Figur 12A gezeigt sind. Auch andere Unterteilungen sind möglich, wie durch die als Beispiel eingezeichneten Linien 152 angedeutet ist.

Es soll zum Ausdruck gebracht werden, daß die Parabolspiegel, die für die Erfindung zur Anwendung gelangen, in großen Abmessungen hergestellt werden können, beispielsweise ohne weiteres mit einer Querabmessung von mehr als 8 m. Solche Gebilde sind relativ schwer zu transportieren, zumal sie relativ leicht sind und bei erhöhten Fahrtwinden leicht beschädigt werden könnten, wenn sie nicht ordnungsgemäß auf dem Transportfahrzeug befestigt sind. Es wird entsprechend der Erfindung daher bevorzugt, den Parabolspiegel aus einzelnen Segmenten herzustellen, die dann an der Montagestelle des Parabolspiegels aneinander befestigt werden, wie nachher näher erläutert wird.

Fig. 12B zeigt, daß die einzelnen Stücke der Sektoren nicht unbedingt mit geraden Kanten ausgeführt werden müssen, sondern jeweils auch zwei gekrümmte Kanten, wie 154 und 156, aufweisen können. Dies gilt für die sektorenförmigen Segmente 158 im mittleren Bereich des Parabolspiegels natürlich nicht. Die Einzelsegmente innerhalb eines Ringes sind gleich.

Fig. 12B zeigt außerdem eine weitere mögliche Unterteilung eines einzelnen Sektors, so daß dieser aus mehreren gleichartigen Stücken 160 besteht, wobei nicht alle Stücke 160 unbedingt gleich sind, jedoch so, daß ein Sektor 142 aus wenigen Segmenten 160 zusammengesetzt werden kann.

Fig. 12C zeigt die Form der Tragstruktur 34, die mit einem Parabolspiegel gemäß Fig. 12A bzw. 12B verwendet werden kann, jeweils in Pfeilrichtung 162 in Fig. 12A bzw. 12B gesehen.

Schließlich zeigt Fig. 12D eine schematische, perspektivische Darstellung eines Parabolspiegels ähnlich der Fig. 12B, aus der ersichtlich ist, daß die Spiegelfläche aus mehreren Segmenten 164 zusammengesetzt werden kann, wovon es der Anzahl der Ringe entsprechend viele Sorten gibt, d.h. in diesem Beispiel fünf Sorten.

Als Material für die Segmente kommt vorzugsweise ein Polystyrolextruderschaum höherer Dichte zur Anwendung, der auf der reflektierenden Seite mit einer reflektierenden Folie, beispielsweise einer Aluminiumfolie, versehen ist.

Ein Beispiel für ein solches Segment, beispielsweise 152 gemäß Fig. 12A, jedoch stellvertretend für die anderen Sektoren und Segmente 142, 144, 160, 164 der Fig. 12A-D, ist in Fig. 13 gezeigt. Man merkt, daß das Segment 152 an allen Seiten mit einer gerundeten Nut 170 versehen ist, die in Gestalt teilkreisförmig ist und sich über etwas mehr als einen Halbkreis erstreckt. Solche Nuten können beispielsweise mit minimalem Materialverlust durch die Anwendung eines beheizten, ebenfalls teilkreisförmig dargestellten Drahtes aus den einzelnen Segmenten 152 herausgeschnitten werden. Es entstehen somit im Querschnitt etwa D-förmige Teile 172. Es besteht dann die Möglichkeit, zwei solche Teile aneinander zu kleben und zwar an der Stelle 174, die in Fig. 13D gezeigt ist. Das Gebilde 177 der Fig. 13D kann mit einer Außenhaut 175 aus faserverstärktem Kunstharz versehen werden. Diese Haut 175 dient einerseits der Verstärkung des Verbindungselements und kompensiert andererseits für die Schnittebreite bei dem Herausstemmen der zwei D-förmigen Teile.

Das Gebilde der Fig. 13D mit dem Querschnitt der Gestalt einer 8 kann dann wieder verwendet werden, um zwei Segmente aneinander zu kleben. Es sorgt, da die Abmessung im Bereich der Pfeile AA größer ist als die Abmessung im Bereich der Pfeile BB, die der Abmessung am Eingang 176 zu den Nuten 170 entspricht, für eine formschlüssige Verbindung zweier Segmente aneinander. Jedes Segment 152 kann gemäß Fig. 13F an zwei Seiten mit einem Gebilde 177 entsprechend der Fig. 13D versehen werden, so daß die Segmente unmittelbar aneinander, entsprechend einer Nut und Feder Konstruktion wie bei Bodenplatten üblich, zusammengesteckt werden können.

Auch kann dieses Teil - wie in Fig. 13E bzw. 13H gezeigt - dazu dienen, ein Segment 152 an ein Rippenteil 180 zu befestigen, das in radialer Richtung über die Spiegelfläche (Spiegelfolie) 171 des Parabolspiegels hinausragt und zur Versteifung des Gebildes, d.h. des Parabolspiegels, dient.

Nach der Verklebung von mehreren Segmenten 160 aneinander, ggf. unter Anwendung von Rippenteilen 180, wird dann über die gesamte Rückseite des Spiegels eine Faserverstärkung 181 gelegt, beispielsweise in Form von Glasfasern, mit einem entsprechenden Harz getränkt, so daß eine wasserdichte, steife Schale entsteht. Diese Schale wird einerseits versteift durch die Schaumteile der Segmente 152 und ggf. der ebenfalls aus Schaumstoff oder Holz oder anderem Material bestehenden Versteifungsrippen 180 und sorgt auch dafür, daß die Segmente selbst nicht verformen, so daß die Eigenschaften des Parabolspiegels stets sichergestellt sind. Bolzen 183 können verwendet werden, um die Segmente mit Verstärkungsrippen während des Aushärtens des Kunstharzes fest aneinander zu halten. Sie können ggf. zu der Festigkeit der fertigen Struktur beitragen oder sie können nach dem Aneinanderhaften der Segmente (durch die Klebverbindung) wieder entfernt werden.

Falls erwünscht könnten Versteifungsrippen 180 statt an der Vorderseite des Parabolspiegels 10 an der Rückseite des Parabolspiegels vorgesehen werden - oder sowohl an der Rückseite als auch an der Innenseite. Es tritt kein Verlust an wirksamer Fläche auf, da die Flächen der Versteifungen der Spiegelfläche hinzuaddiert werden. Der Spiegel wird also lediglich geringfügig größer, kann jedoch insgesamt helfen, den Spiegel zu versteifen, so daß er noch größer gebaut werden kann und seine wirksame Oberfläche auf diese Weise vergrößert werden kann.

Die Erzeugung einer Schale aus einem Verbundmaterial, beispielsweise mit Harz getränkten Glasfasern, ermöglicht es außerdem, die Anlenklaschen 38, 88 und 90 an den Parabolspiegel anzubringen. Diese Laschen können nämlich ebenfalls als faserverstärkte Verbundmaterialien realisiert werden, ggf. mit eingebetteten Buchsen oder Metall- oder Holzversteifungen, um die Schwenkachsen mit ausreichender Festigkeit an den Parabolspiegel zu befestigen. Holz saugt sich mit Kunstharz voll und wird besonders fest. Eine solche Konstruktion ist leicht.

Auch die Tragstruktur 34 kann aus Verbundmaterialien bestehen und kann ebenfalls unter Anwendung von solchen faserverstärkten Schichten an den Parabolspiegel gebondet werden.

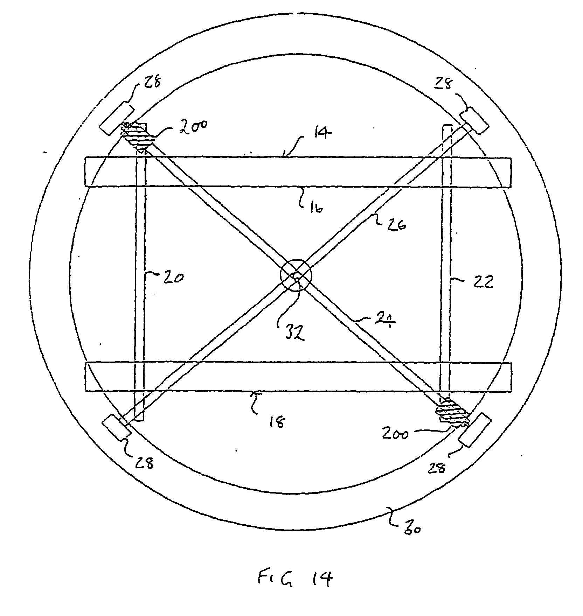

Fig. 14 zeigt eine erste Möglichkeit, den Drehantrieb des Parabolspiegels, d.h. für die horizontale Nachführung, um die vertikale Achse 32 zu realisieren. Die Darstellung gemäß Fig. 14 entspricht weitestgehend der Darstellung gemäß Fig. 1, nur wurde zum Zweck der Darstellung der Parabolspiegel und die zugeordneten Lenkarme weggelassen. Im übrigen ist der Grundrahmen 14 etwas anders ausgelegt, und zwar um Platz zu schaffen für die Anbringung zweier Motoren 200, die zwei der Räder 28 direkt oder über Getriebe antreiben. Obwohl hier zwei Motoren 200 gezeigt sind, wäre es auch denkbar, nur mit einem Motor 200 zu arbeiten. Auch können alle Räder 28 angetrieben werden. Man merkt, daß die zwei Räder 28, die von den Motoren 200 direkt angetrieben werden, im Durchmesser etwas größer sind als die zwei anderen Räder 28. Der Grund hierfür ist, daß man sicherstellen will, daß die größeren Räder 28 stets einen antreibenden Kontakt mit der Führungsbahn 30 aufweisen. Die anderen beiden Räder dienen lediglich der Stabilität und werden aufgrund der großen Abmessungen des Grundrahmens 14 durch eine leichte Verbiegung desselben ihren eigenen Kontakt mit der Führungsbahn 30 erzielen, wobei jedoch die Berührungskräfte an den größeren Räder 28 höher sein dürfen. Gleichgroße angetriebene Räder könnten auch etwas tiefergelegt werden.

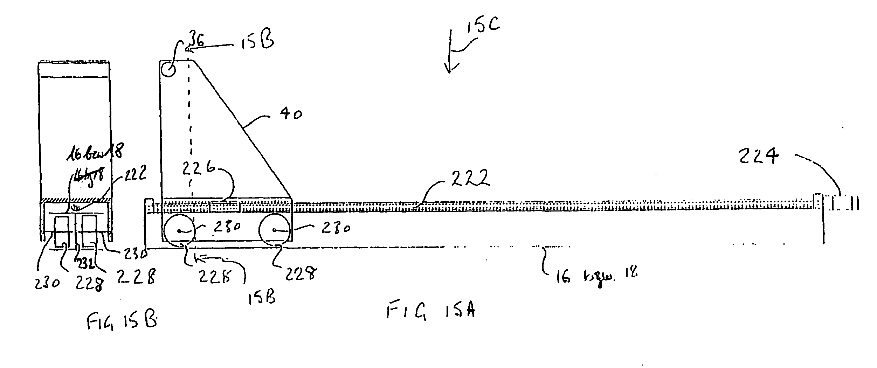

Fig. 15 zeigt eine schematische Darstellung einer möglichen Anordnung zum Verschieben der Schubblöcke 40, um die vertikale Nachführung des Parabolspiegels zu erreichen. Bei dieser Ausführungsform kommt eine Gewindestange 222 zur Anwendung, die von einem Motor 224 zu einer Drehbewegung angetrieben wird. Die Drehbewegung der Gewindestange 222 wird über ein Mutterelement 226 an den angetriebenen Schubblock 40 übertragen, so daß dieser, der auf vier Rollen 228 beweglich gelagert ist, sich entlang des jeweiligen Balkens 16 bzw. 18 in beiden Richtungen verfahren werden kann, wobei zur Erzielung der Bewegung in beiden Richtungen es sich bei dem Motor 224 um einen reversiblen Motor handelt.

Die Querschnittsszeichnung gemäß Fig. 15B läßt erkennen, wie die Rollen 228 auf Achsstummel 230 gelagert sind, die in jeweiligen, C-förmigen Räumen links und rechts des Mittelsteges 232 des als I-Träger realisierten Balkens 16 bzw. 18 hineinragen, wobei die Rollen 228 auf dem unteren Gurt des Trägers ablaufen.

Um die Synchronisation der zwei Schubblöcke 40 kostengünstig zu gewährleisten und nur mit einem Motor 224 auszukommen, wird entsprechend Fig. 15C die eine Gewindespindel 222 vom Motor 224 direkt angetrieben - d.h. die Gewindespindel 222, die in Fig. 15C dem Träger 18 zugeordnet ist- -, während die dem Träger 16 zugeordnete Spindel 222 über eine Kette 234 synchron mit der direkt angetriebenen Spindel 222 angetrieben wird. Zu diesem Zweck läuft die Kette 234 um zwei Kettenräder 236, 238 gleicher Größe, wobei das Kettenrad 236 an der Spindel 222 mit der Ausgangswelle des Motors 224 bzw. der entsprechenden Gewindespindel 222 drehfest verbunden ist. Das Kettenrad 238 ist mit der in Fig. 15C unteren Gewindespindel 222 drehfest verbunden.

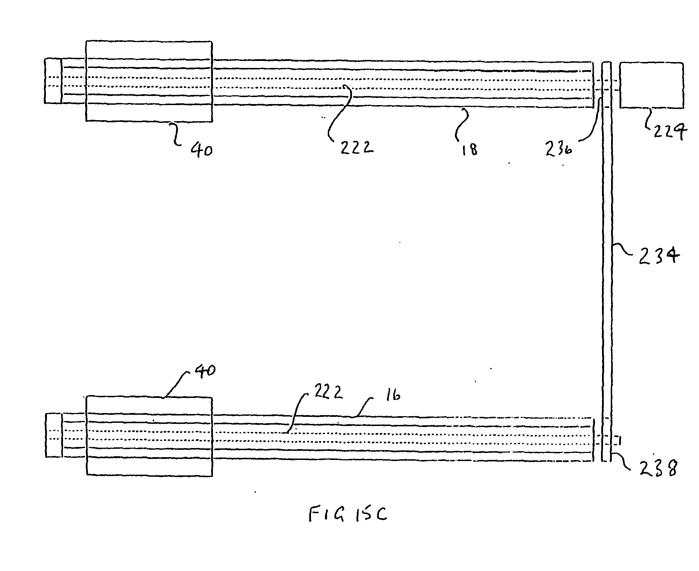

Schließlich zeigt Fig. 16 eine alternative Möglichkeit, die zwei Schubblöcke 40 synchron von einem Motor 224 anzutreiben. Hier sind die Schubblöcke 40 wie bei der Ausführungsform gemäß Fig. 15C mit Rollen auf den jeweiligen Trägern 18 bzw. 16 verschiebbar gelagert. Die Details dieser Lagerung entsprechen denen der Fig. 15 und werden hier nicht weiter gezeigt.

Der Motor 224 treibt eine Schnecke 240 an, die mit zwei Schneckenrädern 242 kämmt, die wiederum jeweilige Seilzüge 244 verschieben. Die Seilzüge sind an jeweiligen Befestigungspunkten 246 mit einem der Schubblöcke 40 verbunden und weisen zum Längenausgleich und zur Sicherstellung der erforderlichen Seilspannung eine jeweilige Spannfeder 248 auf. Jeder Seilzug 244 läuft über mehrere Umlenkrollen 250 um, die in Fig. 16 schematisch dargestellt sind.

Obwohl die Darstellung gemäß Fig. 16 den Eindruck erweckt, als ob die Seilzüge 244 um die jeweiligen Schneckenräder 242 laufen würden, laufen die Seilzüge tatsächlich um Zylinder herum, die unterhalb oder oberhalb der Schneckenräder liegen. Obwohl es denkbar wäre, daß man eine ausreichend treibende Kraft erzeugen könnten, wenn sich die Seilzüge nur um den halben Umfang des Zylinders erstrecken würden, ist es wahrscheinlich günstiger, wenn die Seilzüge mehrere Umdrehungen um den antreibenden Zylinder aufweisen. Dies hat zwar den Nachteil, daß die Seilzüge dann in axialer Richtung der Zylinder bei Umdrehung der Zylinder verschoben werden, da sie beispielsweise von oben abgewickelt und von unten aufgewickelt werden. Diese Längenänderung kann jedoch durch die Spannfeder 248 kompensiert werden.

Besonders vorteilhaft bei der Anordnung gemäß Fig. 16 ist, daß es sich um eine sehr preisgünstige Lösung handelt, nicht nur deshalb, weil Seilzüge relativ preisgünstig erhältlich sind, sondern auch deshalb, weil die Verwendung eines Schneckenantriebes bestehend aus der Schnecke 240 und die Schneckenräder 242 eine Untersetzung ermöglichen, so daß mit einem verhältnismäßig kleinen, hochtourigen und preisgünstigen Motor 224 gearbeitet werden kann und das Antriebssystem ist selbsthaltend, d.h. eine gesonderte Bremse entfällt.

Es soll auch zum Ausdruck gebracht werden, daß der Außenumriß des Parabolspiegels keinesfalls nur halbkreisförmig realisiert werden kann. Der Parabolspiegel kann in Draufsicht beispielsweise eine rechteckige Gestalt oder eine rechteckige Gestalt mit abgerundeten Ecken haben, wobei die abgerundeten Ecken vorzugsweise die zwei Ecken sind, die von der im Betrieb unteren Kante des Parabolspiegels entfernt liegen. Obwohl bei manchen der hier gezeigten Beispielen die untere Kante in Draufsicht geradlinig erscheint (da man die durch die parabolischer Form gegebene Krümmung in dieser Blickrichtung nicht sieht), ist es auch denkbar, dieser eine leicht gekrümmte Form zu geben.

Auch kann ohne weiteres ein in Draufsicht kreisrunder Parabolspiegel zum Zwecke der Erfindung benutzt werden. Dies kann insbesondere dann vom Vorteil sein, wenn beispielsweise der Parabolspiegel auf einem in Draufsicht in etwa kreisförmigen Schwimmbad bzw. auf einem in Draufsicht in etwa kreisförmigem Haus verwendet werden soll bzw. einen kreisförmigen Bereich eines Schwimmbades oder eines Hauses abdecken soll.

Bei einer derartigen Anordnung wird die Anlenkachse 46 an einer Stelle am Parabolspiegel angeordnet, die sozusagen einem horizontalen Durchmesser des Parabolspiegels entspricht, und zwar entweder an der Vorderseite oder an der Rückseite entsprechend der Ausführungsform gemäß Fig. 5 oder Fig. 6. Die Schwenkachse 36 wird sich dann im Bereich der unteren Kante des Parabolspiegels in der hochgeschwenkten Stellung befinden, vorzugsweise etwas oberhalb von dieser unteren Kante. Hier kommt dann auch der besondere Vorzug der Erfindung zu tragen, daß die Schwenkbewegung des Parabolspiegels durch die gegenseitige Verschiebung der Anlenkachsen 46 und 36 sozusagen aufeinander zu und voneinander weg erreicht wird.

Der Schwerpunkt des Spiegels bleibt dadurch stets ungefähr über der Mitte des Tragrahmens 14.

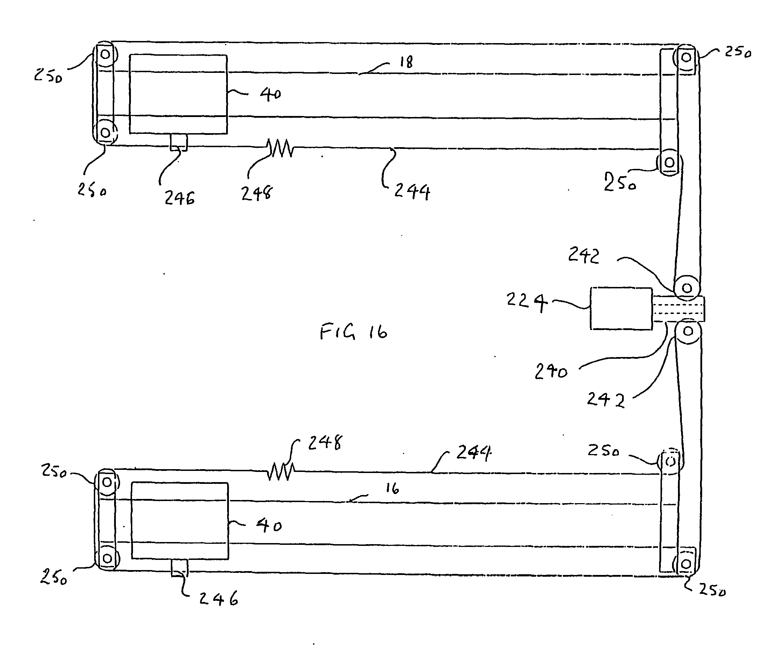

Bei der weiteren Beschreibung anhand der Figuren 17-22 werden einige bevorzugte Varianten der Erfindung beschrieben und für gleiche Teile werden die gleichen Bezugszeichen wie bisher verwendet, um eine unnötige Wiederholung der Beschreibung der entsprechenden Teile zu vermeiden. Das heißt, die bisherige Beschreibung gilt auch hier für Teile, die die gleichen Bezugszeichen aufweisen, es sei denn, etwas anderes wird zum Ausdruck gebracht. Wenn neue Merkmale beschrieben werden, so werden diese mit neuen Bezugszeichen versehen.

Die Figur 17 entspricht zumindest im wesentlichen der Darstellung gemäß Figur 5E, jedoch mit der Ausnahme, daß der Grundrahmen 14 am vorderen Ende 300, d.h. im Bereich der Schwenkachse 36 im herauf geschwenkten Zustand des Parabolspiegels 10 angehoben ist im Verhältnis zum hinteren Ende 302, d.h. im Verhältnis zu dem Bereich, wo die Schwenkachse 36 im herunter geschwenkten Zustand des Parabolspiegels 10 zu liegen kommt. Hierdurch wird die maximale Schwenkbewegung, die durch den Stellantrieb zu bewerkstelligen ist, zwischen dem vollständig herunter geschwenkten Zustand parallel zum Grundrahmen 14 und dem voll herauf geschwenkten Zustand gemäß Figur 17 im Vergleich zu der Ausführung gemäß Figur 5 verkleinert, wodurch die Auslegung des Stellantriebs positiv beeinflußt wird. Dies ist besonders wichtig bei Sonnenhochstand - insbesondere am Äquator - da der Parabolspiegel beim Heraufschwenken eine waagerechte oder fast waagerechte Position einnehmen muß.

Eine Möglichkeit, diese geneigte Stellung des Grundrahmens 14 zu erreichen, besteht darin, die vorderen Räder 28 an Beinen wie 304 anzubringen, die sich vom Grundrahmen 14 nach unten erstrecken. Eine andere Möglichkeit wäre, die vorderen Räder 28 mit einem größeren Durchmesser zu versehen wie bei 28A schematisch dargestellt ist, d.h. der Grundrahmen 14 wird in diesem Beispiel vorne, d.h. an der Seite, an der die obere Kante des Parabolspiegels im heruntergeschwenkten Zustand zu liegen kommt, durch einen beliebigen Unterbau erhöht, z.B. durch den senkrechten Balken oder Bein 304, der für eine höhere Stabilität verstrebt werden kann.

Die Figur 17 zeigt außerdem ein Gummiseil 306, das zwischen dem vorderen Ende 300 des Grundrahmens 14 und dem Receiver 62 gespannt wird. Die Seilspannung erzeugt im herauf geschwenkten Zustand des Parabolspiegels 10 gemäß Figur 17 einen Drehmoment um die Schwenkachse 36 herum, der dem Stellantrieb beim Herunterschwenken des Parabolspiegels 10 hilft, das aufgrund der Wirkung von Schwerkraft erzeugte Drehmoment zu überwinden.

In ähnlicher Weise kann ein Gummiseil (nicht gezeigt) zwischen dem vorderen Ende 300 des Grundrahmens und der im heruntergeschwenkten Zustand des Parabolspiegels unteren Kante 308 der Tragstruktur 34 gespannt werden, das dem Stellantrieb beim Heraufschwenken des Parabolspiegels aus dem herunter geschwenkten Zustand hilft. Im herauf geschwenkten Zustand wird dieses Gummiseil dann schlaff werden.

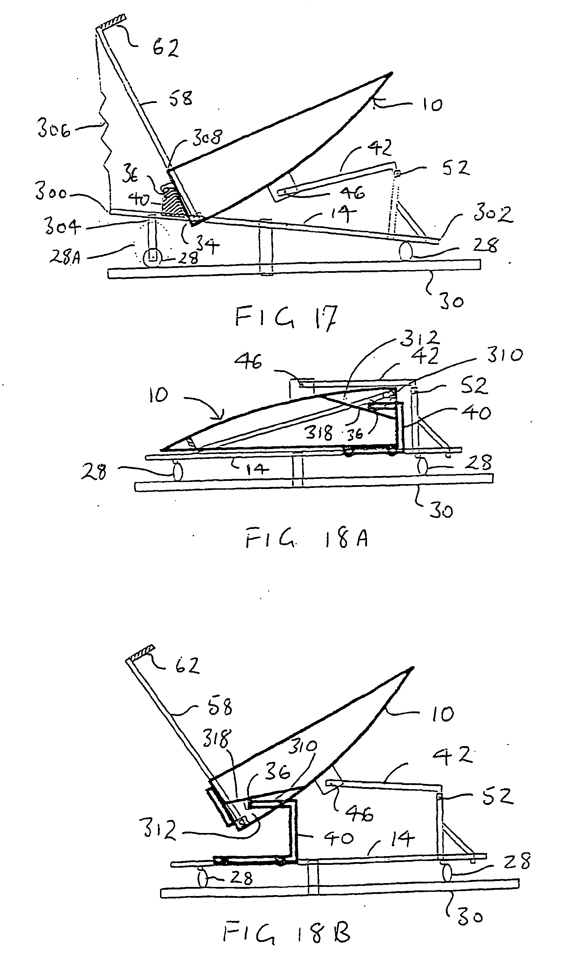

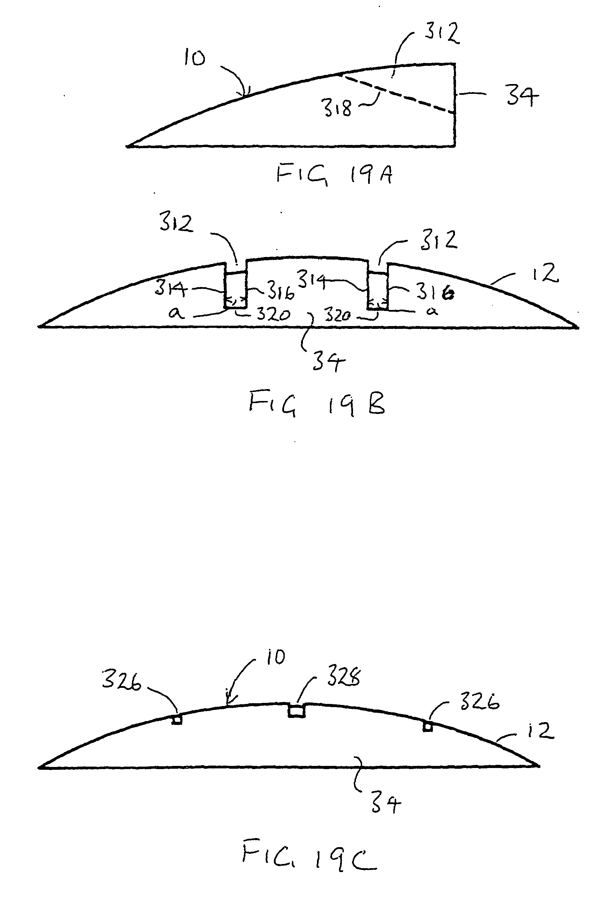

Die Figur 18A entspricht in etwa der Darstellung der Figur 5A, jedoch wird in dieser Ausführung die Schwenkachse 36 an einem oberen Tragrahmen 310 des Schubblocks 40 angebracht und zwar an einer Stelle, die in einer Aussparung 312 des Parabolspiegels angeordnet ist. Diese Aussparung 312, die in Figur 19A und 19B auch gezeigt ist und von der es zwei in diesem Beispiel gibt (eine Aussparung für jeden Schubblock 40), sind durch jeweils zwei Wände 314, 316 gebildet, die in der Seitenansicht die Form eines rechtwinkligen Dreiecks aufweisen und voneinander einen Abstand "a" aufweisen. Von jeder Seitenwand ist eine Seite am Parabolspiegel 10 fest verbunden, während die zweite Seite, die mit der ersten Seite zumindest im wesentlichen einen rechten Winkel bildet, mit der Tragstruktur 34 verbunden ist. Die beiden Hypotenusen 318 der Wände 314, 316 sind miteinander bei 320 verbunden, um somit eine steife Ausbildung des Parabolspiegels zu erreichen. Das heißt, daß jede Aussparung 312 vom Schnittpunkt der Wölbung des Parabolspiegels 10 mit der Tragstruktur 34 bis zu einer gedachten Linie zwischen den Schwenkachsen 36 und 46 reicht oder einer dazu gedachten parallelen Linie. Diese dreieckige Aussparung kann beispielsweise aus Holz bestehen oder mit einem anderen festen Material ausgekleidet bzw. gebildet und verfestigt werden.

Außer der erwünschten Versteifung und Verstärkung des Parabolspiegels erlauben die Aussparungen 312, die Schwenkachse 52 tiefer zu legen, da die Aussparung den Lenkarm 42 aufnehmen kann, was allerdings nicht gezeigt ist. Im übrigen kann aufgrund der Aussparung der Parabolspiegel 10 im heraufgeschwenkten Zustand auch weiter nach hinten geschwenkt werden, da der obere Tragarm 310 des Schubblocks in die Aussparung zu liegen kommt, wie in Figur 18B gezeigt. Man merkt, daß die Schubblöcke 40, die hier zur Anwendung gelangen in Seitenansicht U-förmig sind, wobei die Schenkel der U-Form waagerecht liegen, der untere Schenkel die Rollen für die lineare Verschiebung des Schubblocks 40 trägt und der obere Schenkel den Tragarm 310 bildet.

Die Figur 19C zeigt, daß der Parabolspiegel 10 überall dort, wo er mit der Unterkante 12 im aufgeklappten Zustand am Grundrahmen 14 oder an anderen Teilen wie dem Stellantrieb anstoßen könnte, eingekerbt, d.h. mit Aussparungen versehen werden kann wie bei 326 und 328 gezeigt ist, um ein Anstoßen zu vermeiden.

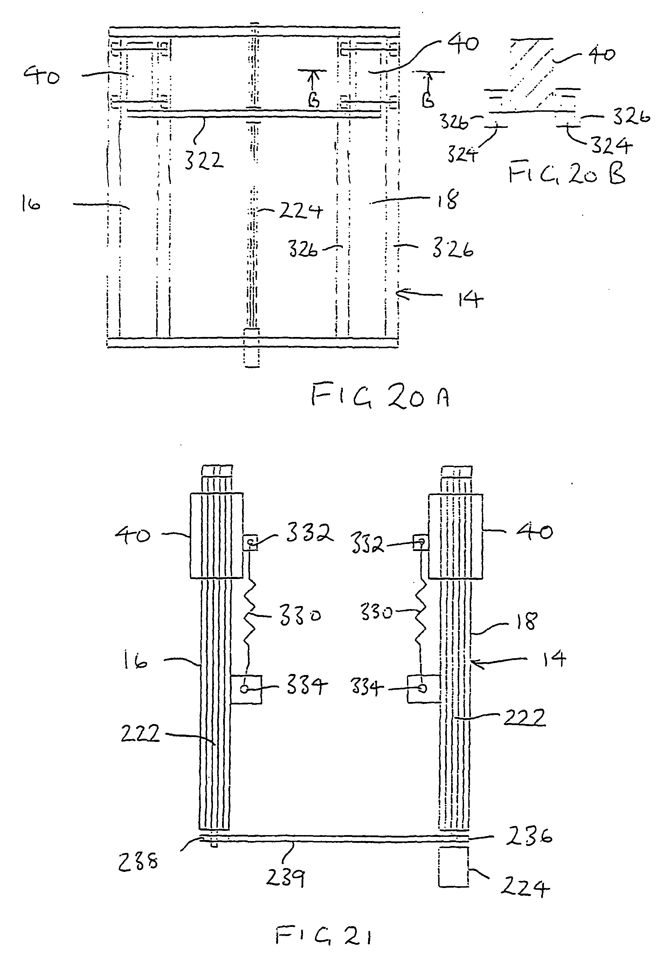

Die Figur 20A zeigt wie mehrere Schubblöcke 40 (hier zwei Schubblöcke) mit einer von der Anzahl der Schubblöcke abweichenden Anzahl von Stellantrieben 224 (hier ein Stellantrieb) angetrieben werden können. Die zwei Schubblöcke werden nämlich fest miteinander, z.B. mittels eines Bretts oder einer Stange 322 zu einem Verbund verbunden und der Stellantrieb 224 greift dann an den Verbund so an, daß die Stellkräfte gleichmäßig auf die beiden Schubblöcke verteilt werden. Um dies zu erreichen, greift in diesem Beispiel mit einem Stellantrieb 224 dieser an die Stange 322 in deren Mitte an. Der Stellantrieb 224 ist vorzugsweise als Garagentorantrieb realisiert.

Der Schnitt B-B zeigt wie je der Schubblock 40 mit zwei Rollenpaaren 324 an die seitlichen Rahmenteile 326 des Grundrahmens 14 linear verfahrbar angebracht ist.

Die zur vertikalen Sonnennachführung in dieser Anmeldung erstmals vorgeschlagene Lösung könnte unter Anwendung der Fachsprache des Maschinenbaus als "verkettetes Getriebe mit einer Schubkurbel und drei Gelenken" bezeichnet werden, wobei die Schubkurbel mit einem Stellantrieb angetrieben wird. Es ist günstig, einen Linearantrieb einzusetzen, weil die Bewegung der Schubkurbel linear ist. Hierfür kann, wie bereits erwähnt, besonders kostengünstig ein handelsüblicher Garagentorantrieb verwendet werden.

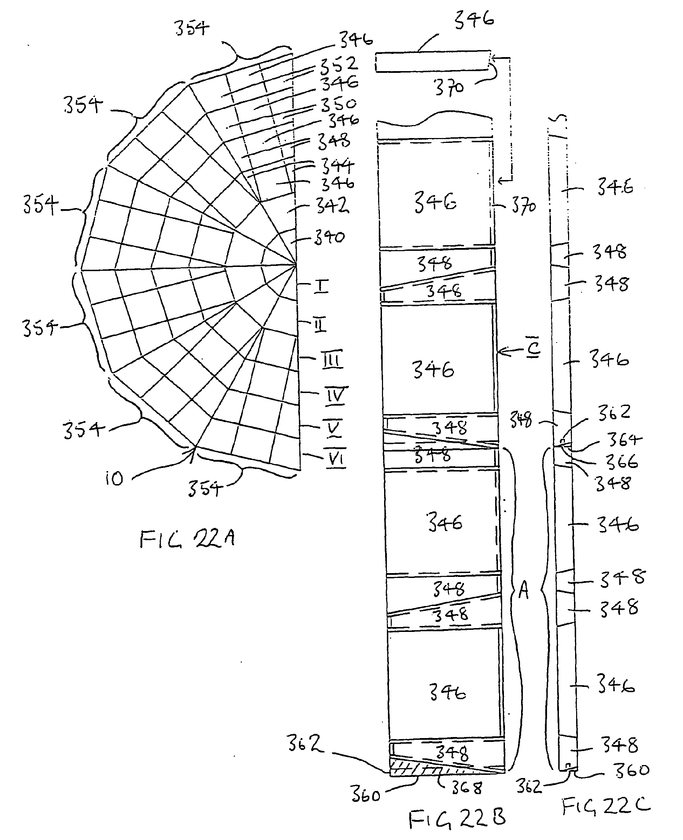

Die Figur 21 zeigt eine Anordnung entsprechend der Figur 15C, jedoch mit zusätzlichen Teilen in Form der Gummiseile 330. Jedes Gummiseil ist mit einem Ende 332 am Schubblock 40 befestigt oder (was nicht gezeigt ist) an einer Struktur, die mehrere Schubblöcke 40 verbindet. Das zweite Ende 334 jedes Gummiseils ist vorzugsweise am Grundrahmen 14 in der Mitte der Fahrstrecke der Schubblöcke befestigt. Zur besseren Dosierung der Federkräfte bzw. Gummispannungskräfte können mehrere Federn oder Gummiseile wie 330 benützt werden, deren jeweils zweites Ende an unterschiedlichen Positionen am Grundrahmen 14 entlang der Fahrstrekke der Schubblöcke befestigt ist. Grundsätzlich kann eine Anordnung dieser Art mit nur einem Schubblock 40 oder mit mehreren Schubblöcken 40 verwendet werden. Es wird dann vorzugsweise für jeden Schubblock mindestens ein Gummiseil 330 vorgesehen.

Die Figur 22A zeigt einen erfindungsgemäßen Parabolspiegel 10, der aus einzelnen ebenen, d.h. nicht gekrümmten Elementen zusammengesetzt ist. Der Parabolspiegel 10 gemäß Figur 22A besteht in diesem Beispiel aus 6 konzentrischen Ringen I, II, III, IV, V, VI. Der Ring I setzt sich aus sechs in Draufsicht dreieckigen Segmenten 340 zusammen. Der Ring II setzt sich aus sechs in Draufsicht trapezförmigen Segmenten 342 zusammen. Der Ring II besteht aus den in Draufsicht trapezförmigen Segmenten 344 und quadratischen Segmenten 346, wobei die trapezförmigen Segmente 344 an ihrem inneren Ende sehr kurz sind und ggf. durch dreieckige Segmente ersetzt werden könnten. Der Ring III besteht wiederum aus in Draufsicht trapezförmigen Elementen 348 und quadratischen Elementen 346. Der Ring V besteht wiederum aus in Draufsicht trapezförmigen Elementen 350 und quadratischen Elementen 346 und dies gilt auch für den Ring VI, der aus in Draufsicht trapezförmigen Elementen 352 und quadratischen Elementen 346 besteht.

Die Seiten der einzelnen Segmente sind so angeschrägt, daß die ebenen Flächen im Parabolspiegel so orientiert sind, daß eine gute Annäherung zu der erwünschten Parabolform sich ergibt. Die einzelnen Elemente werden zur Bildung von Segmenten aneinander im Bereich ihrer Seiten verklebt und die einzelnen dreieckigen Segmente 354 werden zur Bildung des Parabolspiegels ebenfalls im Bereich der langen Seiten mit den benachbarten dreieckigen Segmenten 354 verklebt. Die gesamte Struktur wird entsprechend der Figur 13 zumindest auf der Rückseite mit durch Glasfaser verstärkten Kunststoff verkleidet, wie in Figur 13 H gezeigt, und es können im Parabolspiegel die notwendigen Aussparungen vorgesehen werden, die im Zusammenhang mit anderen Figuren beschrieben sind.

Es wird nunmehr anhand der Figuren 22B und 22C gezeigt, wie die Konstruktion gemäß Figur 22A zumindest im wesentlichen verschnittfrei aus Extruderschaumplatten wie A hergestellt werden können und zwar hier anhand der Elemente 348 und 346 des Ringes IV, wobei die hier gegebene Erläuterung genauso für die Elemente der anderen Ringe gilt.

Eine handelsübliche Extruderschaumplatte A wie sie für vorliegende Erfindung geeignet ist, kann beispielsweise in Abmessungen von etwa 60 cm Breite x 240 cm Länge x 4 cm Dicke von den Herstellerfirmen bezogen werden. Solche Extruderschaumplatten sind häufig mit Nut- und Federverbindungen an ihren Schmalseiten versehen, wobei die untere Schmalseite 360 in Figur 22B und 22C mit einer Nut 362 versehen ist und die obere Schmalseite 364 in Figur 22B und 22C mit einer Feder 366 versehen ist, die in einer entsprechenden Nut 362 in die nächstfolgende Platte eingesteckt ist. Es genügt, die Extruderschaumplatten einfach zusammen zu stecken, wahlweise kann eine Klebeverbindung im Bereich der Nut-und Federverbindung vorgesehen werden. Auf diese Weise entsteht ein längliches Gebilde sowie in Figur 22B und 22C gezeigt, wobei dieses Gebilde aus einzelnen Platten zusammengesetzt ist, was nur am Beispiel der unteren Platten angedeutet ist, um die Darstellung nicht unnötig zu verkomplizieren.

Statt die Plattenbahn aus mehreren einzelnen Platten wie A zu bilden, könnte sie als kontinuierliche Bahn aus dem Schaumstoffextruder verwendet werden, die dann gleich nach dem Extruder in einzelne Elemente zu unterteilen ist.

Der untere dreieckige Bereich 368, der in Figur 22B schraffiert dargestellt ist, ist als Verschnitt zu verstehen. Anschließend werden von der durch die Platten gebildeten Materialbahn folgende Elemente in der Reihenfolge von unten nach oben herausgeschnitten: 348, 346, 348, 348, 346, 348, 348, 346, 348, 348, 346, usw. Im Bereich der Nut- und Federverbindung 362, 366 zwischen zwei Extruderschaumplatten entsteht zumindest im wesentlichen kein Verschnitt. Das heißt der straffierte Bereich 368 entsteht nur am Anfang der ersten Platte.

Man merkt an den doppelten Linien im Kantenbereich der einzelnen Elemente wie bei 370 gezeigt, daß die Elemente hier angeschrägt sind. Dies gilt für alle Bereiche, die mit einer doppelten Linie gezeichnet sind, wobei der Grad der Abwinklung dem jeweiligen Ring entsprechend zu wählen ist. In manchen angeschrägten Bereichen kann ein gewisser Verschnitt entstehen, der aber minimal ist.

Die gestrichelten Linien zeigen Kanten, die an der Unterseite der Plattenbahn gemäß Figur 22B gebildet sind.

Obwohl die Darstellung gemäß Figuren 22B und 22C nur für den Ring IV gilt, versteht man, daß ein entsprechendes Schnittschema für die Elemente der anderen Ringe gilt. Der Verschnitt, der minimal ist, kann auch wieder eingeschmolzen werden, so daß man insgesamt verlustfrei arbeiten kann.

Besonders günstig ist, daß einige der geraden Schnitte, insbesondere die, die quer oder schräg zu der jeweiligen Materialplatte bzw. der Materialbahn verlaufen gleichzeitig die angeschrägten, d.h. schräggestellten Seiten von zwei Elementen bilden, wodurch einerseits Materialverluste minimiert werden und andererseits das Schneidverfahren wirtschaftlich durchgeführt werden kann. Die Schrägwinkel von schräggestellten Seiten der Elemente sind jeweils so ausgelegt, daß bei Zusammenstellung der Elemente die angenäherte Parabolform entsteht. D.h., daß die in etwa radial verlaufenden Seiten der Elemente eines jeden Ringes die gleichen Schrägwinkel aufweisen, daß aber die anderen Seiten der einzelnen Elemente, welche um die Rotationssymmetrieachse verlaufen, von unterschiedlichen Ringen je nach Position des Ringes innerhalb der Parabolform unterschiedlich gewählt werden, um die erwünschte angenäherte Parabolform zu schaffen.

Obwohl die Parabolspiegelkonstruktion, die hier offenbart ist, vornehmlich für Solarspiegel verwendet wird, kann die Konstruktion auch für andere Zwecke, wie Radarsysteme oder Satellitenempfang verwendet werden.

Diese Weiterbildungen bzw. Ausführungsformen sind jedoch nicht Gegenstand dieser Erfindung.

## Patentansprüche

1. Konzentrierendes Solarenergiesystem mit einem als zweiachsig nachgeführten Parabolspiegel realisierten Reflektor (10) mit einer spiegelnden Innenseite, der von einem in einer Tragebene angeordneten Grundrahmen (14) getragen ist und mit einem im Betrieb in, vor oder nach dem Brennpunkt (110) des Parabolspiegels angeordneten Receiver (62), wobei der Parabolspiegel außerdem um eine zumindest im wesentlichen senkrecht zur Tragebene angeordnete Achse (32) drehbar ist,
der Parabolspiegel (10) um eine untere, im Bereich der Tragebene oder in einem Abstand oberhalb oder unterhalb dieser angeordnete Schwenkachse (36) hinauf- und herunterschwenkbar ist, und
wobei die Schwenkbewegung des Parabolspiegels durch mindestens einen Lenkarm (42) unterstützt ist, der an einem Ende im mittleren Bereich des Parabolspiegels und am anderen Ende am Grundrahmen (14) angelenkt ist, **dadurch gekennzeichnet, dass** diese Schwenkachse (36) in einer zur Tragebene parallelen Ebene oder in der Tragebene verschiebbar angeordnet ist und die Verschiebung der Schwenkachse (36) zu der entsprechenden Schwenkbewegung des Parabolspiegels (10) führt bzw. beiträgt.

2. Konzentrierendes Solarenergiesystem nach Anspruch 1,
**dadurch gekennzeichnet,**
**dass** der Parabolspiegel (10) um die Schwenkachse (36) soweit herunter schwenkbar ist, dass er im heruntergeschwenkten Zustand ein Dach bildet und/oder dass der Parabolspiegel (10) im heruntergeschwenkten Zustand auf einer Tragfläche, einem Fundament (30), einem Untergrund oder einer dem Umriss des Parabolspiegels (10) angepassten Mauer aufliegt und gegebenenfalls mit dieser oder mit diesen verriegelbar ist.

3. Konzentrierendes Solarenergiesystem nach einem der vorhergehenden Ansprüche,
**dadurch gekennzeichnet,**
**dass** eine längliche Tragstruktur (34) sich entlang der unteren Kante (12) des Parabolspiegels (10) erstreckt und sowohl den Parabolspiegel versteift als auch die Schwenkachse (36) trägt.

4. Konzentrierendes Solarenergiesystem nach einem der vorhergehenden Ansprüche,
**dadurch gekennzeichnet,**
**dass** zur Realisierung der Drehbewegung um die senkrechte Achse der Grundrahmen mittels Rollen (28) oder Räder auf einer kreisförmigen Bahn (30) drehbar ist.

5. Konzentrierendes Solarenergiesystem nach einem der vorhergehenden Ansprüche,
**dadurch gekennzeichnet,**
**dass** zur Realisierung der Schwenkbewegung der Parabolspiegel (10) über eine Gestängeanordnung (42) mit dem Grundrahmen (14) verbunden ist und die Schwenkachse (36) über den Grundrahmen (14) verfahrbar ist und dass die Gestängeanordnung aus mindestens einem Lenkarm (42) besteht, der an einem Ende im mittleren Bereich des Parabolspiegels (10) auf dessen Rückseite (bei 46) und am anderen Ende auf einem Stützpunkt (52) schwenkbar angelenkt ist, der vom Grundrahmen (14) getragen und hinter dem Parabolspiegel (10) angeordnet ist.

6. Konzentrierendes Solarenergiesystem nach einem der vorhergehenden Ansprüche,
**dadurch gekennzeichnet,**
**dass** zur Realisierung der Schwenkbewegung der Parabolspiegel (10) über eine Gestängeanordnung (42) mit dem Grundrahmen (14) verbunden ist und die Schwenkachse (36) über den Grundrahmen (14) verfahrbar ist und dass die Gestängeanordnung aus mindestens einem Lenkarm (42) besteht, der an einem Ende im mittleren Bereich des Parabolspiegels (10) auf dessen spiegelnde Innenseite und am anderen Ende auf einem Stützpunkt (52) schwenkbar angelenkt ist, der vom Grundrahmen (14) getragen ist und sich im heruntergeschwenkten Zustand des Parabolspiegels benachbart zu der Position befindet, die die im hochgeschwenkten Zustand obere Kante des Parabolspiegels (10) annimmt.

7. Konzentrierendes Solarenergiesystem nach einem der vorhergehenden Ansprüche,
**dadurch gekennzeichnet,**
**dass** der Receiver (62) an einem Ende eines Tragarms (58) vorgesehen ist, dessen anderes Ende im Bereich der unteren Kante (12) des Parabolspiegels (10) angelenkt ist, vorzugsweise an der genannten Tragstruktur und beim Hinaufschwenken des Parabolspiegels mit aufschwenkbar ist.

8. Konzentrierendes Solarenergiesystem nach einem der vorhergehenden Ansprüche,
**dadurch gekennzeichnet,**
**dass** der Parabolspiegel aus Segmenten zusammengesetzt ist, die jeweils aus Extruderschaumkörpern (Polystyrol oder ähnliches) bestehen, die an einer ebenen oder parabolisch gekrümmten Fläche mit einer Spiegelfolie (179) bedeckt und an deren Rückseite mit einer Haut (181) eines faserverstärkten Kunststoffs beispielsweise aus Glasfaser und Polyesterharz versehen sind, wobei die Segmente (152) an deren Längsseiten miteinander fügbar bzw. zusammengefügt sind.

9. Konzentrierendes Solarenergiesystem nach einem der vorhergehenden Ansprüche,
**dadurch gekennzeichnet,**
**dass** eine Feder (306, 330) oder mehrere Federn, beispielsweise in Form eines Gummiseils oder mehrerer Gummiseile, vorgesehen ist bzw. sind, um die Stellkraft des zum Schwenken des Parabolspiegels (20) vorgesehenen Motors (224) bzw. der zum Schwenken des Parabolspiegels vorgesehenen Motoren zu unterstützen.

10. Konzentrierendes Solarenergiesystem nach einem der vorhergehenden Ansprüche,
**dadurch gekennzeichnet,**
**dass** der Paraboloidspiegel (10) aus einzelnen, nicht gekrümmten trapezförmigen Elementen (342, 344, 348, 350, 352 und 346) besteht, deren Seiten gerade sind und in der Form schräg geschnitten sind, dass die aneinander gefügten Elemente die erwünschte Form des Parabolspiegels ergeben und zumindest einige der geraden Schnitte die Seitenform von jeweils zwei Elementen bilden, wodurch die aneinander gefügten Elemente die weitgehend verlustfrei aus einer Materialplatte oder Materialbahn bzw. aus einer aus Materialplatten zusammengesetzten Materialbahn schneidbar bzw. geschnitten sind.

## Claims

1. Concentrating solar energy system with a reflector (10) which has a specularly reflecting inner side, which is realized as a parabolic mirror with two axis steering, which is carried by a base frame (14) arranged in a support plane and which has a receiver (62) which is arranged in operation at, in front of or after the focal point (110) of the parabolic mirror, wherein the parabolic mirror is moreover rotatable about an axis (32) arranged at least substantially perpendicular to the support plane,
wherein the parabolic mirror (10) is pivotable upwardly and downwardly about a lower pivot axis (36) arranged in the region of the support plane or at a spacing above or below it,
wherein the pivotal movement of the parabolic mirror is assisted by at least one link arm (42) which is hinged at one end in the middle region of the parabolic mirror and at the other end to the base frame (14),
**characterized in that**
this pivot axis (36) is displaceably arranged in a plane parallel to the support plane or in the support plane and the displacement of the pivot axis (36) leads or contributes to the corresponding pivotal movement of the parabolic mirror (10).

2. Concentrating solar energy system in accordance with claim 1, **characterized in that** the parabolic mirror (10) can be pivoted downwardly about the pivot axis (36) to such an extent that it forms a roof in the downwardly pivoted state; and/or **in that** the parabolic mirror (10) lies in the downwardly pivoted state on a support surface, a foundation (30), a ground base or a wall matched to the outline of the parabolic mirror (10) and is optionally latchable thereto.

3. Concentrating solar energy system in accordance with any one of the preceding claims, **characterized in that** an elongate support structure (34) extends along the lower edge (12) of the parabolic mirror (10) and both stiffens the parabolic mirror and also carries the pivot axle (36).

4. Concentrating solar energy system in accordance with any one of the preceding claims, **characterized in that** the base frame is rotatable by means of rollers (28) or wheels on a circular track (30) to realize the rotational movement about the vertical axis.

5. Concentrating solar energy system in accordance with any one of the preceding claims, **characterized in that**, for the realization of the pivotal movement, the parabolic mirror (10) is connected via a link arrangement (42) to the base frame (14) and the pivot axis (36) is movable over the base frame (14); and **in that** the link arrangement consists of at least one link arm (42) which is pivotally connected at one end in the central region of the parabolic mirror (10) to its rear side (at 46) and at the other end to a support point (52) which is carried by the base frame (14) and is arranged behind the parabolic mirror (10).

6. Concentrating solar energy system in accordance with any one of the preceding claims, **characterized in that**, for the realization of the pivotal movement, the parabolic mirror (10) is connected via a link arrangement (42) to the base frame (14) and the pivot axis (36) is movable over the base frame (14); and **in that** the link arrangement consists of at least one link arm (42) which is pivotally connected at one end in the central region of the parabolic mirror (10) to its specularly reflecting inner side and at the other end to a support point (52) which is carried by the base frame (14) and is located in the downwardly pivoted state of the parabolic mirror adjacent to the position the upper edge of the parabolic mirror (10) adopts in the downwardly pivoted state.

7. Concentrating solar energy system in accordance with any one of the preceding claims, **characterized in that** the receiver (62) is provided at one end of a carrier arm (58), the other end of which is hinged in the region of the lower edge (12) of the parabolic mirror, preferably to the said support structure, and is copivoted upwardly on upward pivoting of the parabolic mirror.

8. Concentrating solar energy system in accordance with any one of the preceding claims, **characterized in that** the parabolic mirror is assembled from segments which respectively consist of extruder foam bodies (polystyrene or the like), which are covered at a planar or parabolically curved surface with a mirror foil (179) and are provided at their rear side with a skin (181) of a fibre reinforced plastic, for example of glass fibre and polyester resin, wherein the segments (152) can be joined to one another or are joined to one another at their longitudinal sides.

9. Concentrating solar energy system in accordance with any one of the preceding claims, **characterized in that** a spring (336, 330) or a plurality of springs, for example in the form of a rubber cable or a plurality of rubber cables, is provided in order to assist the positioning force of the motor (224) provided for the pivoting of the parabolic mirror (20) or the motors provided for the pivoting of the parabolic mirror.

10. Concentrating solar energy system in accordance with any one of the preceding claims, **characterized in that** the parabolic mirror (10) consists of individual non-curved trapezoidal elements (342, 344, 348, 350, 352 and 346) segments, the sides of which are straight and which are obliquely cut in shape such that the elements which are joined to one another produce the desired shape of the parabolic mirror and at least some of the straight cuts form the side shape of at least two elements, whereby the elements which are joined together are cuttable or cut in a largely waste-free manner from a plate of material or material web or from a material web assembled from material plates.

## Revendications

1. Système concentrateur pour énergie solaire, comprenant un réflecteur (10) réalisé sous forme de miroir parabolique soumis à un suivi en deux axes, avec un côté intérieur spécularisé, qui est porté par un cadre de base (14) agencé dans un plan porteur, et comprenant un récepteur (62) agencé en fonctionnement au foyer (110) du miroir parabolique, ou en avant ou en arrière dudit foyer, ledit miroir parabolique étant en outre en rotation autour d'un axe (32) agencé au moins essentiellement perpendiculairement au plan porteur, le miroir parabolique (10) étant capable de pivoter vers le haut et vers le bas autour d'un axe de pivotement (36) inférieur agencé dans la zone du plan porteur ou à une certaine distance au-dessus ou au-dessous de celui-ci, et dans lequel le mouvement de pivotement du miroir parabolique est assisté par au moins un bras articulé (42) qui est articulé à une extrémité dans la région médiane du miroir parabolique et à l'autre extrémité sur le cadre de base (14),
**caractérisé en ce que**
ledit axe de pivotement (36) est agencé à déplacement dans un plan parallèle au plan porteur ou dans le plan porteur, et le déplacement de l'axe de pivotement (36) mène ou contribue au mouvement de pivotement correspondant du miroir parabolique (10).

2. Système concentrateur pour énergie solaire selon la revendication 1,
**caractérisé en ce que**
le miroir parabolique (10) est capable de pivoter autour de l'axe de pivotement (36) vers le bas aussi loin que, dans l'état pivoté vers le bas, il forme un toit, et/ou **en ce que** le miroir parabolique (10) repose, dans l'état pivoté vers le bas, sur une surface portante, une fondation (30), un sous-sol, ou un mur adapté au contour du miroir parabolique (10) et susceptible d'être verrouillé le cas échéant avec celle-ci/celui-ci.

3. Système concentrateur pour énergie solaire selon l'une des revendications précédentes,
**caractérisé en ce que**
une structure portante allongée (34) s'étend le long de l'arête inférieure (12) du miroir parabolique (10) et assure à la fois une rigidification du miroir parabolique et un support pour l'axe de pivotement (36).

4. Système concentrateur pour énergie solaire selon l'une des revendications précédentes,
**caractérisé en ce que**, pour réaliser le mouvement de rotation autour de l'axe perpendiculaire, le cadre de base est en rotation sur une trajectoire de forme circulaire (30) au moyen de galets (28) ou de roues.

5. Système concentrateur pour énergie solaire selon l'une des revendications précédentes,
**caractérisé en ce que**
pour réaliser le mouvement de pivotement, le miroir parabolique (10) est relié au cadre de base (14) via une tringlerie (42), et l'axe de pivotement (36) est déplaçable au-dessus du cadre de base (14), et **en ce que** la tringlerie comprend au moins un bras articulé (42) qui est articulé en pivotement à une extrémité dans la zone médiane du miroir parabolique (10) sur sa face postérieure (vers 46) et à l'autre extrémité sur un point de soutien (52) qui est porté par le cadre de base (14) et agencé en arrière du miroir parabolique (10).

6. Système concentrateur pour énergie solaire selon l'une des revendications précédentes,
**caractérisé en ce que**
pour réaliser le mouvement de pivotement, le miroir parabolique (10) est relié au cadre de base (14) via une tringlerie (42), et l'axe de pivotement (36) est déplaçable au-dessus du cadre de base (14), et **en ce que** la tringlerie comprend au moins un bras articulé (42) qui est articulé en pivotement à une extrémité dans la zone médiane du miroir parabolique (10) sur sa face intérieure spécularisée et à l'autre extrémité sur un point de soutien (52) qui est porté par le cadre de base (14) et qui, dans la situation pivotée vers le bas du miroir parabolique, se trouve au voisinage de la position occupée, dans l'état pivoté vers le haut, par l'arête supérieure du miroir parabolique (10).

7. Système concentrateur pour énergie solaire selon l'une des revendications précédentes,
**caractérisé en ce que**
le récepteur (62) est prévu à une extrémité d'un bras porteur (58) dont l'autre extrémité est articulée dans la zone de l'arête inférieure (12) du miroir parabolique (10), de préférence au niveau de la structure portante précitée, et susceptible d'être pivoté vers le haut conjointement avec le miroir parabolique lors du pivotement de celui-ci vers le haut.

8. Système concentrateur pour énergie solaire selon l'une des revendications précédentes,
**caractérisé en ce que**
le miroir parabolique est composé de segments qui sont constitués chacun par des corps en mousse extrudée (polystyrène ou analogue), qui sont recouverts d'une feuille spécularisée (179) sur une surface plane ou à courbure parabolique, et qui sont pourvus sur leur face postérieure d'une peau (181) de matière plastique renforcée par des fibres, par exemple des fibres de verre et de la résine polyester, lesdits segments (152) étant assemblés ou susceptibles de l'être au niveau de leurs côtés longitudinaux.

9. Système concentrateur pour énergie solaire selon l'une des revendications précédentes,
**caractérisé en ce que**
il est prévu un ou plusieurs ressort(s) (306, 330), par exemple sous la forme d'un ou plusieurs câble(s) en caoutchouc, afin d'assister la force de positionnement du ou des moteur(s) (224) prévu(s) pour le pivotement du miroir parabolique (20).

10. Système concentrateur pour énergie solaire selon l'une des revendications précédentes,
**caractérisé en ce que**
le miroir parabolique (10) est constitué par des éléments individuels (342, 344, 348, 350, 352 et 346) non incurvés et de forme trapézoïdale, dont les côtés sont rectilignes et qui sont taillés avec une forme oblique de telle façon que les éléments assemblés ensemble produisent la forme souhaitée pour le miroir parabolique et forment au moins certaines des coupes droites de la forme latérale de deux éléments respectifs, grâce à quoi les éléments mutuellement assemblés sont coupés ou susceptibles de l'être largement sans perte à partir d'une plaque ou d'une bande de matériau, ou d'une bande de matériau composée de plaques de matériau.
